(19) Europäisches Patentamt / European Patent Office / Office européen des brevets

(11) **EP 4 683 089 A1**

(12) **EUROPEAN PATENT APPLICATION**
published in accordance with Art. 153(4) EPC

(43) Date of publication:
**21.01.2026 Bulletin 2026/04**

(21) Application number: **24770476.0**

(22) Date of filing: **22.02.2024**

(51) International Patent Classification (IPC):
$H01M\ 50/443^{(2021.01)}$    $H01G\ 11/38^{(2013.01)}$
$H01M\ 50/403^{(2021.01)}$    $H01M\ 50/411^{(2021.01)}$
$H01M\ 50/434^{(2021.01)}$    $H01M\ 50/446^{(2021.01)}$
$H01M\ 50/451^{(2021.01)}$

(52) Cooperative Patent Classification (CPC):
**H01G 11/38; H01M 50/403; H01M 50/411;
H01M 50/434; H01M 50/443; H01M 50/446;
H01M 50/451; Y02E 60/10**

(86) International application number:
**PCT/JP2024/006550**

(87) International publication number:
**WO 2024/190363 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 JP 2023041410**

(71) Applicant: **Zeon Corporation
Tokyo 100-8246 (JP)**

(72) Inventor: **OGIHARA, Tasuku
Tokyo 100-8246 (JP)**

(74) Representative: **Maiwald GmbH
Elisenhof
Elisenstraße 3
80335 München (DE)**

(54) **BINDER COMPOSITION FOR ELECTROCHEMICAL ELEMENT FUNCTIONAL LAYER, SLURRY COMPOSITION FOR ELECTROCHEMICAL ELEMENT FUNCTIONAL LAYER, LAMINATE FOR ELECTROCHEMICAL ELEMENT, AND ELECTROCHEMICAL ELEMENT**

(57) Provided is a binder composition for an electrochemical device functional layer that has excellent redispersibility after long-term storage and that can cause a functional layer to display excellent adhesiveness. The binder composition for an electrochemical device functional layer contains a particulate polymer, a water-soluble polymer, and water. The particulate polymer has a volume particle diameter D50 of not less than 1.0 μm and not more than 15.0 μm and a true specific gravity of not less than 1.00 and not more than 2.00.

EP 4 683 089 A1

**Description**

TECHNICAL FIELD

The present disclosure relates to a binder composition for an electrochemical device functional layer, a slurry composition for an electrochemical device functional layer, a laminate for an electrochemical device, and an electrochemical device.

BACKGROUND

Electrochemical devices such as lithium ion secondary batteries and electric double-layer capacitors have characteristics such as compact size, light weight, high energy-density, and the ability to be repeatedly charged and discharged, and are used in a wide variety of applications. An electrochemical device generally includes battery members such as a positive electrode, a negative electrode, and a separator that isolates the positive electrode and the negative electrode from each other and prevents short-circuiting between the positive and negative electrodes.

In electrochemical devices such as lithium ion secondary batteries, battery members that include a heat-resistant layer for improving heat resistance, an adhesive layer for adhering battery members to each other, or the like (hereinafter, such layers are referred to generally as "functional layers") can be used. Specifically, electrodes that further include a functional layer formed on an electrode substrate in which an electrode mixed material layer is provided on a current collector and separators that include a functional layer formed on a separator substrate have been used as battery members. In recent years, further improvements to functional layers have been studied with the aim of achieving even higher performance in electrochemical devices such as lithium ion secondary batteries.

For example, Patent Literature (PTL) 1 proposes compounding a particulate polymer having an average circularity of not less than 0.90 and less than 0.99 and a volume-average particle diameter of not less than 1.0 $\mu$m and not more than 10.0 $\mu$m in a composition for an electrochemical device functional layer in order to form a functional layer that can display excellent adhesiveness.

Moreover, PTL 2 proposes compounding a particulate polymer that includes a polymer A including a (meth) acrylic acid ester monomer unit and an acidic group-containing monomer unit and a polymer B having a different chemical composition from the polymer A and that has a volume-average particle diameter of more than 1.0 $\mu$m and not more than 10.0 $\mu$m in a composition for an electrochemical device functional layer with the aim of forming a functional layer that has a balance of sufficiently high levels of an attribute (process adhesiveness) of adhering members to each other in a production process of an electrochemical device and an attribute (blocking resistance) of inhibiting unintended adhesion to another member (blocking).

CITATION LIST

Patent Literature

PTL 1: WO2020/175292A1
PTL 2: WO2022/163780A1

SUMMARY

(Technical Problem)

Since long-term storage of a binder composition for an electrochemical device functional layer containing a particulate polymer can result in sedimentation of the particulate polymer, it is desirable that the particulate polymer is quickly redispersed upon stirring of the binder composition for an electrochemical device functional layer.

It is also desirable that a functional layer formed using a binder composition for an electrochemical device functional layer has excellent adhesiveness with a battery member.

However, a conventional composition for an electrochemical device functional layer leaves room for improvement in terms of having excellent redispersibility after long-term storage and causing a functional layer to display excellent adhesiveness.

Accordingly, one object of the present disclosure is to provide a binder composition for an electrochemical device functional layer that has excellent redispersibility after long-term storage and that can cause a functional layer to display excellent adhesiveness.

Another object of the present disclosure is to provide a slurry composition for an electrochemical device functional layer in which a presently disclosed binder composition for an electrochemical device functional layer is used.

Another object of the present disclosure is to provide a laminate for an electrochemical device that includes a functional layer formed using the aforementioned binder composition for an electrochemical device functional layer or the aforementioned slurry composition for an electrochemical device functional layer.

Another object of the present disclosure is to provide an electrochemical device that includes the aforementioned laminate for an electrochemical device.

(Solution to Problem)

The inventor conducted diligent studies with the aim of achieving the objects described above. The inventor made a new discovery that the problems described above can be solved through a binder composition for an electrochemical device functional layer that contains a particulate polymer having a specific volume particle diameter D50 and a specific true specific gravity, a water-soluble polymer, and water, and, in this manner, completed the present disclosure.

Specifically, with the aim of advantageously solving the problems set forth above, [1] a presently disclosed binder composition for an electrochemical device functional layer comprises a particulate polymer, a water-soluble polymer, and water, wherein the particulate polymer has a volume particle diameter D50 of not less than 1.0 $\mu$m and not more than 15.0 $\mu$m and a true specific gravity of not less than 1.00 and not more than 2.00.

A binder composition for an electrochemical device functional layer such as set forth above has excellent redispersibility after long-term storage (hereinafter, also referred to as "long-term redispersibility") and can cause a functional layer to display excellent adhesiveness. Note that the term "long-term" as used in the present specification means normally 5 days or more, preferably 10 days or more, more preferably 30 days or more, and even more preferably 90 days or more.

The volume particle diameter D50 of a particulate polymer referred to in the present specification means the particle diameter at which, in a particle size distribution (by volume) obtained through measurement using a particle size analyzer, cumulative volume calculated from a small diameter end of the distribution reaches 50%, and can be measured according to a method described in the EXAMPLES section.

The true specific gravity of a particulate polymer referred to in the present specification can be measured in accordance with JIS Z8837 by a pycnometer method.

The term "water-soluble polymer" as used in the present specification refers to a polymer having a solubility of 1 g/L or more in water at 25°C.

[2] In the binder composition for an electrochemical device functional layer according to the foregoing [1], the water-soluble polymer preferably has a weight-average molecular weight of not less than 80,000 and not more than 500,000.

When the weight-average molecular weight of the water-soluble polymer is within the range set forth above, long-term redispersibility of the binder composition for an electrochemical device functional layer and aggregation inhibition of the binder composition for an electrochemical device functional layer after long-term storage (hereinafter, also referred to as "long-term aggregation inhibition") can be improved.

The weight-average molecular weight referred to in the present specification can be measured according to a method described in the EXAMPLES section.

[3] In the binder composition for an electrochemical device functional layer according to the foregoing [1], the water-soluble polymer preferably has a weight-average molecular weight of not less than 5,000 and not more than 200,000.

When the weight-average molecular weight of the water-soluble polymer is within the range set forth above, long-term redispersibility of the binder composition for an electrochemical device functional layer can be improved.

[4] In the binder composition for an electrochemical device functional layer according to any one of the foregoing [1] to [3], the water-soluble polymer preferably includes an acid group.

When the water-soluble polymer includes an acid group, long-term redispersibility of the binder composition for an electrochemical device functional layer can be improved.

[5] The binder composition for an electrochemical device functional layer according to any one of the foregoing [1] to [4] preferably has a pH of not lower than 6.0 and not higher than 12.0.

When the pH of the binder composition for an electrochemical device functional layer is within the range set forth above, aggregation of solid content such as the particulate polymer contained in the binder composition for an electrochemical device functional layer can be inhibited, and coating stability can be improved.

The pH of a binder composition for an electrochemical device functional layer referred to in the present specification can be measured according to a method described in the EXAMPLES section.

[6] The binder composition for an electrochemical device functional layer according to any one of the foregoing [1] to [5] preferably has a viscosity of not less than 0.5 mPa·s and not more than 10 mPa·s.

When the viscosity of the binder composition for an electrochemical device functional layer is within the range set forth above, coating stability can be improved.

The viscosity of a binder composition for an electrochemical device functional layer referred to in the present specification can be measured according to a method described in the EXAMPLES section.

[7] The binder composition for an electrochemical device functional layer according to any one of the foregoing [1] to [6] preferably further comprises a particulate binder.

When the binder composition for an electrochemical device functional layer further contains a particulate binder, adhesiveness of a functional layer can be improved.

[8] The binder composition for an electrochemical device functional layer according to any one of the foregoing [1] to [7] preferably has a solid content concentration of not less than 10.0 mass% and not more than 35.0 mass%.

When the solid content concentration of the binder composition for an electrochemical device functional layer is not less than the lower limit set forth above, the number of applications in formation of a functional layer can be reduced, and functional layer productivity can be improved.

On the other hand, when the solid content concentration of the binder composition for an electrochemical device functional layer is not more than the upper limit set forth above, long-term redispersibility of the binder composition for an electrochemical device functional layer can be improved. Moreover, redispersibility after short-term storage (hereinafter, also referred to as "short-term redispersibility") can be improved. Note that the term "short-term" as used in the present specification means normally less than 5 days.

[9] The binder composition for an electrochemical device functional layer according to any one of the foregoing [1] to [8] preferably further comprises an amine compound.

When the binder composition for an electrochemical device functional layer further contains an amine compound, decay or the like of the binder composition for an electrochemical device functional layer can be inhibited, and preservation stability of the binder composition for an electrochemical device functional layer can be improved.

Moreover, with the aim of advantageously solving the problems set forth above, [10] a presently disclosed slurry composition for an electrochemical device functional layer comprises: the binder composition for an electrochemical device functional layer according to any one of the foregoing [1] to [9]; and non-conductive heat-resistant particles.

A slurry composition for an electrochemical device functional layer such as set forth above can cause a functional layer to display excellent adhesiveness.

Furthermore, with the aim of advantageously solving the problems set forth above, [11] a presently disclosed laminate for an electrochemical device comprises: a substrate; and a functional layer formed on the substrate, wherein the functional layer is obtained using the binder composition for an electrochemical device functional layer according to any one of the foregoing [1] to [9] or the slurry composition for an electrochemical device functional layer according to the foregoing [10].

A laminate for an electrochemical device such as set forth above can improve electrochemical characteristics (for example, cycle characteristics and output characteristics) of an electrochemical device including the laminate for an electrochemical device.

Also, with the aim of advantageously solving the problems set forth above, [12] a presently disclosed electrochemical device comprises the laminate for an electrochemical device according to the foregoing [11].

An electrochemical device such as set forth above can display excellent electrochemical characteristics (for example, cycle characteristics and output characteristics).

(Advantageous Effect)

According to the present disclosure, it is possible to provide a binder composition for an electrochemical device functional layer that has excellent redispersibility after long-term storage and that can cause a functional layer to display excellent adhesiveness.

Moreover, according to the present disclosure, it is possible to provide a slurry composition for an electrochemical device functional layer in which the presently disclosed binder composition for an electrochemical device functional layer is used.

Furthermore, according to the present disclosure, it is possible to provide a laminate for an electrochemical device that includes a functional layer formed using the aforementioned binder composition for an electrochemical device functional layer or the aforementioned slurry composition for an electrochemical device functional layer.

Also, according to the present disclosure, it is possible to provide an electrochemical device that includes the aforementioned laminate for an electrochemical device.

DETAILED DESCRIPTION

The following provides a detailed description of embodiments of the present disclosure.

The presently disclosed binder composition for an electrochemical device functional layer (hereinafter, also referred to as a "binder composition") can be used to produce the presently disclosed slurry composition for an electrochemical device functional layer (hereinafter, also referred to as a "slurry composition"). Moreover, the presently disclosed binder composition and the presently disclosed slurry composition can be used as a material in formation of a functional layer that is included in the presently disclosed laminate for an electrochemical device (hereinafter, also referred to simply as a "laminate"). Furthermore, the presently disclosed laminate for an electrochemical device can be used to produce the presently disclosed electrochemical device.

(Binder composition for electrochemical device functional layer)

The presently disclosed binder composition for an electrochemical device functional layer contains a particulate polymer having a specific volume particle diameter D50 and a specific true specific gravity, a water-soluble polymer, and water, and can optionally further contain a particulate binder, an amine compound, and other components. A binder composition such as set forth above has excellent long-term redispersibility and can cause a functional layer to display excellent adhesiveness. The reason for these effects is presumed to be that good contact area between a functional layer formed using the binder composition and a battery member can be ensured as a result of the particulate polymer having a specific volume particle diameter D50 and that the presence of both the particulate polymer having a specific volume particle diameter D50 and a specific true specific gravity and the water-soluble polymer in the binder composition means that the water-soluble polymer suitably infiltrates into gaps of the particulate polymer when sedimentation of the particulate polymer occurs and thereby effectively inhibits aggregation or the like of the particulate polymer due to long-term storage.

Note that the presently disclosed binder composition does not normally contain non-conductive heat-resistant particles that are described further below.

<Particulate polymer>

The particulate polymer can function as adhesive particles for adhering battery members to each other in a functional layer. The particulate polymer is a polymer that has a particulate form in the binder composition and that has a volume particle diameter D50 of not less than 1.0 $\mu$m and not more than 15.0 $\mu$m and a true specific gravity of not less than 1.00 and not more than 2.00. By using a particulate polymer such as set forth above, it is possible to improve long-term redispersibility of the binder composition and adhesiveness of a functional layer.

Note that the particulate polymer may have a particulate form or may have any other form after battery members have been adhered to each other via a functional layer formed using the binder composition or the like. Moreover, the particulate polymer may be a crystalline macromolecular polymer, an amorphous macromolecular polymer, or a mixture thereof.

<<Properties of particulate polymer>>

The volume particle diameter D50 of the particulate polymer is required to be 1.0 $\mu$m or more, and is preferably 1.5 $\mu$m or more, more preferably 1.8 $\mu$m or more, and even more preferably 2.0 $\mu$m or more. Moreover, the volume particle diameter D50 of the particulate polymer is required to be 15.0 $\mu$m or less, and is preferably 13.0 $\mu$m or less, more preferably 10.0 $\mu$m or less, and even more preferably 8.0 $\mu$m or less.

When the volume particle diameter D50 of the particulate polymer is not less than any of the lower limits set forth above, adhesiveness of a functional layer can be improved.

On the other hand, when the volume particle diameter D50 of the particulate polymer is not more than any of the upper limits set forth above, shedding of the particulate polymer from a functional layer can be effectively inhibited. Moreover, redispersibility of the binder composition can be improved.

Note that the volume particle diameter D50 of the particulate polymer can be adjusted through the type or amount of a metal hydroxide that is used in production of the particulate polymer or through the production method and production conditions of the particulate polymer. Details of the metal hydroxide are described further below.

The true specific gravity of the particulate polymer is required to be 1.00 or more, and is preferably 1.02 or more, more preferably 1.04 or more, and even more preferably 1.05 or more. Moreover, the true specific gravity of the particulate polymer is required to be 2.00 or less, and is preferably 1.50 or less, more preferably 1.30 or less, and even more preferably 1.20 or less.

When the true specific gravity of the particulate polymer is within any of the ranges set forth above, the particulate polymer can be dispersed well in the binder composition straight after production of the binder composition.

Note that the true specific gravity of the particulate polymer can be adjusted through the chemical composition of particles contained in the particulate polymer, the type or amount of a metal hydroxide that is used in production of the particulate polymer, or the production method and production conditions of the particulate polymer.

Although the particulate polymer may be solid particles having a dense inner part, porous particles having a porous inner part, or hollow particles having a hollow inner part without any specific limitations, solid particles are preferable from a viewpoint of improving adhesiveness of a functional layer.

Note that the structure of the inner part of the particulate polymer can be adjusted through the production method and the production conditions of the particulate polymer.

The average circularity of the particulate polymer is preferably 0.900 or more, more preferably 0.920 or more, and even more preferably 0.950 or more, and is preferably 0.999 or less, more preferably 0.995 or less, and even more preferably 0.990 or less.

When the average circularity of the particulate polymer is within any of the ranges set forth above, adhesiveness of a functional layer can be improved.

The median circularity of the particulate polymer is preferably 0.900 or more, more preferably 0.950 or more, and even more preferably 0.980 or more, and is preferably 0.999 or less, and more preferably 0.998 or less.

When the average circularity and the median circularity of the particulate polymer are within any of the ranges set forth above, adhesiveness of a functional layer can be improved.

The average circularity and median circularity of the particulate polymer referred to in the present specification can be measured according to a method described in the EXAMPLES section.

Note that the average circularity and median circularity of the particulate polymer can be adjusted through the production method and the production conditions of the particulate polymer.

The glass-transition temperature (Tg) of the particulate polymer is preferably 0°C or higher, more preferably 25°C or higher, even more preferably 40°C or higher, and further preferably 50°C or higher, and is preferably 200°C or lower, more preferably 150°C or lower, even more preferably 120°C or lower, and further preferably 100°C or lower.

When the glass-transition temperature of the particulate polymer is not lower than any of the lower limits set forth above, blocking resistance of a functional layer can be improved.

On the other hand, when the glass-transition temperature of the particulate polymer is not higher than any of the upper limits set forth above, adhesiveness of a functional layer, and particularly adhesiveness of a functional layer to an electrode can be improved.

<<Chemical composition of polymer contained in constituent particles of particulate polymer>>

Any known polymer can be used as a polymer (hereinafter, also referred to as "polymer A") that is contained in constituent particles of the particulate polymer without any specific limitations so long as at least the volume particle diameter D50 and the true specific gravity of the particulate polymer are within the ranges set forth above.

Note that the particulate polymer may optionally further contain a subsequently described wax in addition to the polymer A.

Examples of monomer units that may be included in the polymer A include an aromatic monovinyl monomer unit, a cross-linkable monomer unit, and a (meth)acrylic acid alkyl ester monomer unit.

Moreover, a polyester polymer that includes a low-molecular weight polyol monomer unit and a polybasic carboxylic acid monomer unit can be used as the polymer A. Such a polyester polymer can be polymerized through dehydration condensation of a low-molecular weight polyol monomer and a polybasic carboxylic acid monomer, for example.

When a polymer is said to "include a monomer unit" in the present specification, this means that "a polymer obtained using that monomer includes a structural unit derived from the monomer". Moreover, the proportional contents of monomer units in a polymer can be measured by a nuclear magnetic resonance (NMR) method such as $^1$H-NMR.

Note that in the present specification, "(meth)acryl" is used to indicate "acryl" and/or "methacryl".

-Aromatic monovinyl monomer unit-

Examples of aromatic monovinyl monomers that can form an aromatic monovinyl monomer unit include, but are not specifically limited to, styrene, α-methylstyrene, butoxystyrene, and vinylnaphthalene, of which, styrene is preferable.

Note that one of these aromatic monovinyl monomers may be used individually, or two or more of these aromatic monovinyl monomers may be used in combination in a freely selected ratio.

The proportional content of aromatic monovinyl monomer units in the polymer A when all repeating units in the polymer A are taken to be 100 mass% is preferably 30 mass% or more, and more preferably 60 mass% or more, and is preferably 85 mass% or less, more preferably 80 mass% or less, and even more preferably 75 mass% or less.

When the proportional content of aromatic monovinyl monomer units is not less than any of the lower limits set forth above, elasticity of the particulate polymer improves, strength of an obtained functional layer is ensured, and close adherence between the functional layer and a substrate can be increased.

On the other hand, when the proportional content of aromatic monovinyl monomer units is not more than any of the upper limits set forth above, flexibility of the particulate polymer increases, and film formability during drying of the binder composition improves. Consequently, close adherence between a functional layer and a substrate can be increased.

-Cross-linkable monomer unit-

Examples of cross-linkable monomers that can form a cross-linkable monomer unit include polyfunctional monomers including two or more groups displaying polymerization reactivity in the monomer. Examples of such polyfunctional monomers include (meth)acrylic acid allyl ester monomers such as allyl methacrylate; aromatic divinyl monomers such as divinylbenzene and divinylnaphthalene; di(meth)acrylic acid ester monomers such as diethylene glycol dimethacrylate, ethylene glycol dimethacrylate, diethylene glycol diacrylate, and 1,3-butylene glycol diacrylate; tri(meth)acrylic acid ester monomers such as trimethylolpropane trimethacrylate and trimethylolpropane triacrylate; and epoxy group-containing ethylenically unsaturated monomers such as allyl glycidyl ether and glycidyl methacrylate. Divinylbenzene is preferable as an aromatic divinyl monomer, ethylene glycol dimethacrylate is preferable as a di(meth)acrylic acid ester monomer, trimethylolpropane trimethacrylate is preferable as a tri(meth)acrylic acid ester monomer, and glycidyl methacrylate is preferable as an epoxy group-containing ethylenically unsaturated monomer.

Note that one of these cross-linkable monomers may be used individually, or two or more of these cross-linkable monomers may be used in combination in a freely selected ratio.

One or more types of cross-linkable monomer units selected from the group consisting of an aromatic divinyl monomer unit, a di(meth)acrylic acid ester monomer unit, a tri(meth)acrylic acid ester monomer unit, and an epoxy group-containing ethylenically unsaturated monomer unit are preferable as cross-linkable monomer units. In other words, the particulate polymer is preferably formed of particles containing a polymer A that includes one or more types of cross-linkable monomer units selected from the group consisting of an aromatic divinyl monomer units, a di(meth)acrylic acid ester monomer unit, a tri(meth)acrylic acid ester monomer unit, and an epoxy group-containing ethylenically unsaturated monomer unit, is more preferably formed of particles containing a polymer A that includes at least one cross-linkable monomer unit among a di(meth)acrylic acid ester monomer unit and an epoxy group-containing ethylenically unsaturated monomer unit, and is even more preferably formed of particles containing a polymer A that includes both a di(meth)acrylic acid ester monomer unit and an epoxy group-containing ethylenically unsaturated monomer unit.

When the particulate polymer is formed of particles containing a polymer A that includes a cross-linkable monomer unit such as described above, adhesiveness of a functional layer can be improved. Moreover, when the particulate polymer is formed of particles containing a polymer A that includes a cross-linkable monomer unit such as described above, excessive deformation of the particulate polymer is inhibited, and, as a result, blocking resistance of a functional layer can be improved. It is also possible to reduce the amount of components of the particulate polymer that elute into electrolyte solution in an electrochemical device and thereby act as a cause of a raised resistance value. As a result, it is possible to improve cycle characteristics of the electrochemical device.

The proportional content of cross-linkable monomer units in the polymer A when the amount of all repeating units in the polymer A is taken to be 100 mass% is preferably 0.1 mass% or more, and more preferably 5 mass% or more, and is preferably 20 mass% or less, more preferably 15 mass% or less, and even more preferably 12 mass% or less.

When the proportional content of cross-linkable monomer units is not less than any of the lower limits set forth above, blocking resistance of a functional layer and cycle characteristics of an electrochemical device can be improved.

On the other hand, when the proportional content of cross-linkable monomer units is not more than any of the upper limits set forth above, the particulate polymer deforms to a suitable degree at a contact surface between a functional layer formed using the binder composition and a battery member in contact therewith, and, as a result, adhesiveness of the functional layer can be improved.

-(Meth)acrylic acid alkyl ester monomer unit-

Examples of (meth)acrylic acid alkyl ester monomers that can form a (meth)acrylic acid alkyl ester monomer unit include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Of these (meth)acrylic acid alkyl ester monomers, n-butyl acrylate, 2-ethylhexyl acrylate, and methyl methacrylate are preferable.

Note that one of these (meth)acrylic acid alkyl ester monomers may be used individually, or two or more of these (meth)acrylic acid alkyl ester monomers may be used in combination in a freely selected ratio.

The proportional content of (meth)acrylic acid alkyl ester monomer units in the polymer A when all repeating units in the polymer A are taken to be 100 mass% is preferably 10 mass% or more, and more preferably 15 mass% or more, and is preferably 90 mass% or less, more preferably 40 mass% or less, and even more preferably 20 mass% or less.

When the proportional content of (meth)acrylic acid alkyl ester monomer units is not less than any of the lower limits set forth above, excessive lowering of the glass-transition temperature of the particulate polymer can be avoided, and blocking resistance of an obtained functional layer can be improved.

On the other hand, when the proportional content of (meth)acrylic acid alkyl ester monomer units is not more than any of the upper limits set forth above, good close adherence between a functional layer and a substrate can be achieved.

-Low-molecular weight polyol monomer unit-

Examples of low-molecular weight polyol that can form a low-molecular weight polyol monomer unit include aliphatic polyols such as ethylene glycol, 1,3-propylene glycol, 1,2-propylene glycol, 1,3-butanediol, 1,4-butanediol, 1,5-pentanediol, 1,6-hexanediol, 3-methyl-1,5-pentanediol, neopentyl glycol, 1,8-octanediol, 1,9-nonanediol, diethylene glycol, 1,4-cyclohexanedimethanol, and glycerin; and aromatic glycols such as 1,4-dimethylolbenzene, bisphenol A, an ethylene oxide adduct of bisphenol A, and a propylene oxide adduct of bisphenol A. Of these examples, aromatic glycols are preferable, and an ethylene oxide adduct of bisphenol A and a propylene oxide adduct of bisphenol A are more preferable. In particular, an ethylene oxide adduct of bisphenol A and a propylene oxide adduct of bisphenol A are preferable.

Note that although one of these low-molecular weight polyol monomers may be used individually, or two or more of these low-molecular weight polyol monomers may be used in combination in a freely selected ratio, it is preferable that two or more of these low-molecular weight polyol monomers are used in combination. In particular, it is preferable that an ethylene oxide adduct of bisphenol A and a propylene oxide adduct of bisphenol A are used in combination as low-molecular weight polyol monomers.

The molecular weight of a low-molecular weight polyol monomer is normally 1,000 or less, and preferably 500 or less.

The proportional content of low-molecular weight polyol monomer units in the polymer A (total proportion in a case in which two or more types are included) when all repeating units in the polymer A are taken to be 100 mass% is preferably 50 mass% or more, and more preferably 60 mass% or more, and is preferably 90 mass% or less, and more preferably 80 mass% or less.

-Polybasic carboxylic acid monomer unit-

Examples of polybasic carboxylic acid monomers that can form a polybasic carboxylic acid monomer unit include polybasic carboxylic acids and polybasic carboxylic acid anhydrides. Examples of polybasic carboxylic acid monomers include aliphatic polybasic carboxylic acids such as malonic acid, ethylmalonic acid, dimethylmalonic acid, succinic acid, 2,2-dimethylsuccinic acid, succinic anhydride, alkenyl succinic anhydride, glutaric acid, adipic acid, pimelic acid, suberic acid, azelaic acid, sebacic acid, fumaric acid, maleic acid, maleic anhydride, itaconic acid, dimer acid, and trimer acid; alicyclic polybasic carboxylic acids such as 1,1-cyclopentanedicarboxylic acid, 1,2-cyclopentanedicarboxylic acid, 1,3-cyclopentanedicarboxylic acid, 1,2-cyclohexanedicarboxylic acid, 1,4-cyclohexanedicarboxylic acid, tetrahydrophthalic anhydride, 4-methylhexahydrophthalic anhydride, hexahydrophthalic anhydride, cyclohexane-1,2,4-tricarboxylic acid-1,2-anhydride, himic anhydride, and HET anhydride; and aromatic polybasic carboxylic acids such as orthophthalic acid, terephthalic acid, isophthalic acid, phthalic anhydride, 1,4-naphthalenedicarboxylic acid, 2,5-naphthalenedicarboxylic acid, 2,6-naphthalenedicarboxylic acid, 2,3-naphthalenedicarboxylic anhydride, naphthalic acid, trimellitic acid, trimellitic anhydride, pyromellitic acid, pyromellitic anhydride, biphenyldicarboxylic acid, 1,2-bis(phenoxy)ethane-p,p'-dicarboxylic acid, benzophenonetetracarboxylic acid, benzophenonetetracarboxylic dianhydride, sodium 5-sulfoisophthalate, tetrachlorophthalic anhydride, and tetrabromophthalic anhydride. Of these polybasic carboxylic acid monomers, fumaric acid and trimellitic anhydride are preferable.

Note that although one of these polybasic carboxylic acid monomers may be used individually, or two or more of these polybasic carboxylic acid monomers may be used in combination in a freely selected ratio, it is preferable that two or more of these polybasic carboxylic acid monomers are used in combination. In particular, it is preferable to use fumaric acid and trimellitic anhydride in combination as polybasic carboxylic acid monomers.

The proportional content of polybasic carboxylic acid monomer units in the polymer A (total proportion in a case in which two or more types are included) when all repeating units in the polymer A are taken to be 100 mass% is preferably 10 mass% or more, and more preferably 20 mass% or more, and is preferably 50 mass% or less, and more preferably 40 mass% or less.

-Other monomer units A-

The polymer A may include monomer units other than the monomer units described above (hereinafter, also referred to as "other monomer units A"). Examples of other monomer units A include a nitrile group-containing monomer unit.

Examples of nitrile group-containing monomers that can form a nitrile group-containing monomer unit include $\alpha,\beta$-ethylenically unsaturated nitrile monomers. Specifically, $\alpha,\beta$-ethylenically unsaturated compounds that include a nitrile group can be used as $\alpha,\beta$-ethylenically unsaturated nitrile monomers without any specific limitations, and examples thereof include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile.

Note that one of these nitrile group-containing monomers may be used individually, or two or more of these nitrile group-containing monomers may be used in combination in a freely selected ratio.

The proportional content of other monomer units A in the polymer A when all repeating units in the polymer A are taken to be 100 mass% is preferably 10 mass% or less, more preferably 7 mass% or less, and even more preferably 5 mass% or less.

-Preferred form of polymer A-

The polymer A preferably includes one or more types of monomer units selected from the group consisting of an aromatic monovinyl monomer unit, a cross-linkable monomer unit, and a (meth)acrylic acid alkyl ester monomer unit, and preferably includes an aromatic monovinyl monomer unit and a cross-linkable monomer unit or includes a (meth)acrylic acid alkyl ester monomer unit and a cross-linkable monomer unit.

When the polymer A includes the monomer units set forth above, it is possible to improve adhesiveness of a functional layer and to reduce the amount of components of the particulate polymer that elute into electrolyte solution in an electrochemical device and thereby act as a cause of a raised resistance value. As a result, it is possible to improve cycle characteristics of the electrochemical device. Long-term redispersibility of the binder composition can also be improved.

<<Proportional content of polymer A in particulate polymer>>

The proportional content of the polymer A in the particulate polymer is preferably 70 mass% or more, more preferably 80 mass% or more, even more preferably 90 mass% or more, and further preferably 95 mass% or more.

<<Production method of particles containing polymer A>>

The particles containing the polymer A can be produced through polymerization of a monomer composition containing the above-described monomers, carried out in an aqueous solvent such as water, for example. The proportion constituted by each monomer in the monomer composition is normally the same as the proportion constituted by each monomer unit in the polymer A.

The method of polymerization is not specifically limited and can be a suspension polymerization method, an emulsion polymerization method, an emulsion polymerization and aggregation method, a pulverization method, a dissolution and suspension method, a seeded polymerization method, or the like. Of these methods, a suspension polymerization method is preferable because the particulate polymer can be produced with low cost and because it is easy to adjust the circularity, etc. of the obtained particulate polymer. Moreover, the polymerization reaction can be radical polymerization, living radical polymerization, or the like.

Other compounding agents such as chain transfer agents, polymerization regulators, polymerization reaction retardants, reactive fluidizers, fillers, flame retardants, antioxidants, and colorants can be compounded in any amount in the monomer composition that is used in production of the particles containing the polymer A.

The following describes a method of producing the particles containing the polymer A by suspension polymerization as one example, but the production method of the particles containing the polymer A is not limited to this example.

-Production of particles containing polymer A by suspension polymerization-

(1) Production of monomer composition

First, constituent monomers of the desired polymer A and other compounding agents that are added as necessary are mixed to produce a monomer composition.

(2) Formation of droplets

Next, the monomer composition is dispersed in water, a polymerization initiator is added, and then droplets of the monomer composition are formed. The droplets can be formed by using a disperser such as an emulsifying/dispersing device to perform shear stirring of the water containing the monomer composition, for example.

In a situation in which a disperser is used in formation of the droplets, the rotation speed of the disperser is preferably more than 8,000 rpm, more preferably 9,500 rpm or more, and even more preferably 11,000 rpm or more, and is preferably less than 15,000 rpm, more preferably 14,000 rpm or less, and even more preferably 13,000 rpm or less.

The polymerization initiator may be an oil-soluble polymerization initiator such as t-butyl peroxy-2-ethylhexanoate or azobisisobutyronitrile, for example. Note that the polymerization initiator may be added before droplet formation once the monomer composition has been dispersed in water or may be added to the monomer composition before dispersion thereof in water.

From a viewpoint of stabilizing droplets of the monomer composition that are formed in the water, it is preferable that a dispersion stabilizer is added to the water and that droplets of the monomer composition are then formed. The dispersion stabilizer can be sodium dodecylbenzenesulfonate, a metal hydroxide such as magnesium hydroxide, or the like, for example. The dispersion stabilizer may be added in the form a colloidal dispersion liquid having the dispersion stabilizer dispersed in water, for example.

(3) Polymerization

Next, once droplets of the monomer composition have been formed, the water containing the formed droplets is heated to initiate polymerization and thereby form particles containing the polymer A in the water. The reaction temperature in the polymerization is preferably not lower than 50°C and not higher than 95°C. Moreover, the reaction time in the polymerization is preferably 1 hour or more, and is preferably 10 hours or less, more preferably 8 hours or less, and even more preferably 6 hours or less.

(4) Washing, filtration, dehydration, and drying step

Once the polymerization has ended, the particles containing the polymer A can be obtained by subjecting the water that contains the particles containing the polymer A to washing, filtration, and drying by standard methods.

<<Wax>>

The wax is a component that can be contained in the particulate polymer together with the polymer A. The inclusion of the wax in the particulate polymer means that, in an electrochemical device including a functional layer-equipped separator that has been formed using the binder composition, for example, the polymer A can quickly melt and suitably cause shutdown of the electrochemical device in a situation in which there is abnormal heating of the electrochemical device due to short circuiting of electrodes or the like. In other words, shutdown functionality can be imparted to the functional layer-equipped separator.

The melting point of the wax is normally lower than 95°C, preferably 90°C or lower, more preferably 81°C or lower, even more preferably 70°C or lower, and further preferably 60°C or lower, and is preferably 40°C or higher, and more preferably 44°C or higher.

When the melting point of the wax is lower than any of the upper limits set forth above, an obtained functional layer can cause a separator to display excellent shutdown functionality.

On the other hand, when the melting point of the wax is not lower than any of the lower limits set forth above, particle stability of the particulate polymer in the binder composition can be increased, and the occurrence of blocking can be effectively inhibited even in a situation in which a battery member that includes a functional layer is wound up in an overlapping manner.

The wax that is contained in the particulate polymer is not specifically limited so long as the melting point is lower than any of the upper limits set forth above and can be a plant wax, an animal wax, a petroleum wax, a synthetic wax, or a modified product of any thereof.

Specific examples of plant waxes include candelilla wax, carnauba wax, rice bran wax, Japan wax, and jojoba oil.

Specific examples of animal waxes include beeswax.

Specific examples of petroleum waxes include paraffin wax, microcrystalline wax, and petrolatum wax.

Synthetic waxes can be categorized as Fischer-Tropsch waxes, polyolefin waxes, ester waxes, and so forth.

Specific examples of polyolefin waxes include polyethylene wax, polypropylene wax, and polybutylene wax.

A monohydric alcohol fatty acid ester or a polyhydric alcohol fatty acid ester can be used as an ester wax. Specific examples of monohydric alcohol fatty acid esters include behenyl stearate. Moreover, specific examples of polyhydric alcohol fatty acid esters include pentaerythritol esters such as pentaerythritol tetramyristate, pentaerythritol tetrapalmitate, pentaerythritol tetrastearate, pentaerythritol tetralaurate, and pentaerythritol tetrabehenate; and dipentaerythritol esters such as dipentaerythritol hexamyristate, dipentaerythritol hexapalmitate, and dipentaerythritol hexalaurate.

Note that one of these waxes may be used individually, or two or more of these waxes may be used in combination.

The content of the wax in the particulate polymer is preferably 1 part by mass or more, more preferably 2 parts by mass or more, even more preferably 5 parts by mass or more, and further preferably 6 parts by mass or more relative to 100 parts by mass of the polymer A, and is preferably 30 parts by mass or less, more preferably 23 parts by mass or less, even more preferably 15 parts by mass or less, further preferably 12 parts by mass or less, and even further preferably 10 parts by mass or less relative to 100 parts by mass of the polymer A.

When the content of the wax in the particulate polymer is not less than any of the lower limits set forth above, an obtained functional layer can cause a separator to display even better shutdown functionality.

On the other hand, when the content of the wax in the particulate polymer is not more than any of the upper limits set forth above, particle stability of the particulate polymer in the binder composition can be increased, and the occurrence of blocking can be inhibited well even in a situation in which a battery member that includes a functional layer is wound up in an overlapping manner.

<Water-soluble polymer>

The water-soluble polymer is a component that can cause good dispersion and redispersion of compounded components such as the above-described particulate polymer in water. By using the water-soluble polymer with the specific particulate polymer, it is possible to improve long-term redispersibility of the binder composition and adhesiveness of a functional layer.

The water-soluble polymer preferably includes an acid group from a viewpoint of improving long-term redispersibility of the binder composition. The acid group may be a carboxy group, a sulfo group, a phosphate group, or the like. The water-soluble polymer may include just one of these types of acid groups or may include two or more of these types of acid groups. Of these acid groups, a carboxy group and a sulfo group are preferable, and a carboxy group is more preferable.

In a case in which the water-soluble polymer includes an acid group, the water-soluble polymer may be present in the form of a salt (salt of a water-soluble polymer). In other words, the term "water-soluble polymer" as used in the present disclosure also encompasses salts of that water-soluble polymer. Examples of such salts include alkali metal salts such as a lithium salt and a sodium salt, and also an ammonium salt.

Note that the water-soluble polymer is preferably in the form of a salt (salt of a water-soluble polymer) from a viewpoint of improving long-term redispersibility of the binder composition. Moreover, when the water-soluble polymer is in the form of a salt, long-term aggregation inhibition of the binder composition can be improved.

No specific limitations are placed on the method by which an acid group is introduced into the water-soluble polymer, and although a water-soluble polymer that includes an acid group-containing monomer unit may be obtained by producing a polymer through addition polymerization of a monomer composition containing at least a monomer including an acid group such as described above (acid group-containing monomer), or a water-soluble polymer including an acid group such as described above may be obtained through modification (for example, terminal modification) of any polymer, the former of these methods is preferable.

The water-soluble polymer in the former of these methods may be polyacrylic acid, for example, and the water-soluble polymer in the latter of these methods may be carboxymethyl cellulose, for example.

<<Acid group-containing monomer unit>>

Examples of acid group-containing monomers that can form an acid group-containing monomer unit include carboxy group-containing monomers, sulfo group-containing monomers, and phosphate group-containing monomers. One of these acid group-containing monomers may be used individually, or two or more of these acid group-containing monomers may be used in combination.

Examples of carboxy group-containing monomers include monocarboxylic acids, derivatives of monocarboxylic acids, dicarboxylic acids, acid anhydrides of dicarboxylic acids, and derivatives of these dicarboxylic acids and acid anhydrides.

Examples of monocarboxylic acids include acrylic acid, methacrylic acid, and crotonic acid.

Examples of derivatives of monocarboxylic acids include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid,

# EP 4 683 089 A1

chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group upon hydrolysis can also be used as a carboxy group-containing monomer.

Other examples include monoesters and diesters of $\alpha,\beta$-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid.

Note that in the present specification, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, ethyl-(meth)acryloyloxyethyl phosphate, vinylphosphonic acid, and dimethyl vinylphosphonate.

Note that in the present specification, "(meth)acryloyl" is used to indicate "acryloyl" and/or "methacryloyl".

The proportional content of acid group-containing monomer units in the water-soluble polymer when the amount of all repeating units in the water-soluble polymer is taken to be 100 mass% is preferably 20 mass% or more, more preferably 50 mass% or more, even more preferably 80 mass% or more, and particularly preferably 100 mass%. In other words, the water-soluble polymer is particularly preferably composed of only acid group-containing monomer units.

<<Other monomer units B>>

The water-soluble polymer may include monomer units other than an acid group-containing monomer unit such as described above (hereinafter, also referred to as "other monomer units B"). Examples of other monomer units B include a (meth)acrylic acid alkyl ester monomer unit such as previously described, a cross-linkable monomer unit such as previously described, and a hydroxy group-containing monomer unit.

Examples of hydroxy group-containing monomers that can form a hydroxy group-containing monomer unit include alkanol esters of ethylenically unsaturated carboxylic acids such as 2-hydroxyethyl acrylate, 2-hydroxypropyl acrylate, 4-hydroxybutyl acrylate, 2-hydroxyethyl methacrylate, 2-hydroxypropyl methacrylate, 4-hydroxybutyl methacrylate, di-2-hydroxyethyl maleate, di-4-hydroxybutyl maleate, di-2-hydroxypropyl itaconate, 1,4-cyclohexanedimethanol monoacrylate, and 2-hydroxy-3-phenoxypropyl acrylate; esters of (meth)acrylic acid and polyalkylene glycol represented by a general formula: $CH_2=CR^1-COO-(C_qH_{2q}O)_p-H$ (where p represents an integer of 2 to 9, q represents an integer of 2 to 4, and $R^1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

Note that one of these hydroxy group-containing monomers may be used individually, or two or more of these hydroxy group-containing monomers may be used in combination in a freely selected ratio.

<<Weight-average molecular weight of water-soluble polymer>>

The weight-average molecular weight (Mw) of the water-soluble polymer is preferably 5,000 or more, more preferably 5,500 or more, even more preferably 6,000 or more, and further preferably 6,500 or more, and is preferably 200,000 or less, more preferably 180,000 or less, even more preferably 160,000 or less, and further preferably 150,000 or less.

When the weight-average molecular weight of the water-soluble polymer is within any of the ranges set forth above, long-term redispersibility of the binder composition can be improved.

The weight-average molecular weight (Mw) of the water-soluble polymer is preferably 5,000 or more, more preferably 5,500 or more, even more preferably 6,000 or more, further preferably 6,500 or more, even further preferably 80,000 or more, yet more preferably 90,000 or more, and yet further preferably 100,000 or more, and is preferably 500,000 or less, more preferably 300,000 or less, even more preferably 200,000 or less, further preferably 180,000 or less, even further preferably 160,000 or less, yet more preferably 150,000 or less, and particularly preferably 120,000 or less.

When the weight-average molecular weight of the water-soluble polymer is within any of the ranges set forth above, long-term redispersibility and long-term aggregation inhibition of the binder composition can be improved.

Moreover, when the weight-average molecular weight of the water-soluble polymer is not more than any of the upper limits set forth above, adhesiveness of a functional layer can be improved.

Note that it is preferable that the water-soluble polymer is in the form of a salt and has a weight-average molecular weight of 80,000 or more, more preferably 90,000 or more, and even more preferably 100,000 or more in terms of particularly enabling improvement of long-term aggregation inhibition.

<<Content of water-soluble polymer>>

The content of the water-soluble polymer in the binder composition is preferably 0.1 parts by mass or more, more preferably 0.2 parts by mass or more, even more preferably 0.4 parts by mass or more, and further preferably 0.5 parts by mass or more per 100 parts by mass of the particulate polymer, and is preferably 5.0 parts by mass or less, more preferably 4.0 parts by mass or less, even more preferably 3.5 parts by mass or less, and further preferably 3.0 parts by mass or less per 100 parts by mass of the particulate polymer.

When the content of the water-soluble polymer in the binder composition is not less than any of the lower limits set forth above, long-term redispersibility of the binder composition can be improved.

On the other hand, when the content of the water-soluble polymer in the binder composition is not more than any of the upper limits set forth above, raising of a resistance value in an electrochemical device can be effectively suppressed, and cycle characteristics of the electrochemical device can be improved.

<<Production method of water-soluble polymer>>

The water-soluble polymer can be produced through polymerization of a monomer composition containing the above-described monomers, carried out in an aqueous solvent such as water, for example. The proportional content of each monomer in the monomer composition can be set in accordance with the proportional content of each monomer unit in the water-soluble polymer. Note that an acid or a base may be added in production of the water-soluble polymer to neutralize the solution.

The method of polymerization can be solution polymerization, suspension polymerization, bulk polymerization, emulsion polymerization, emulsion polymerization and aggregation, or the like without any specific limitations. Moreover, the polymerization reaction can be ionic polymerization, radical polymerization, living radical polymerization, or the like. Furthermore, random polymerization or block polymerization can be adopted as the polymerization method.

Typically used additives such as emulsifiers, dispersants, polymerization initiators, polymerization aids (polymerization accelerators), molecular weight modifiers, and reaction inhibitors can be used in the polymerization. The used amounts of these additives can also be the same as typically used. The polymerization conditions can be adjusted as appropriate depending on the polymerization method, the type of polymerization initiator, and so forth.

<Particulate binder>

The particulate binder that can optionally be contained in the presently disclosed binder composition can function as adhesive particles for adhering battery members to each other in the same manner as the particulate polymer. When the presently disclosed binder composition contains the particulate binder, adhesiveness of a functional layer can be improved.

In addition, the particulate binder can also function as a binder that binds together components such as the particulate polymer that are contained in a functional layer and prevents shedding of these components.

Note that the particulate binder may have a particulate form or may have any other form after battery members have been adhered to each other via a functional layer formed using the binder composition.

<<Volume particle diameter D50 of particulate binder>>

The volume particle diameter D50 of the particulate binder is preferably 0.08 $\mu$m or more, more preferably 0.1 $\mu$m or more, and even more preferably 0.12 $\mu$m or more, and is preferably 1.0 $\mu$m or less, more preferably 0.5 $\mu$m or less, even more preferably 0.45 $\mu$m or less, and further preferably 0.4 $\mu$m or less.

When the volume particle diameter D50 of the particulate binder is not less than any of the lower limits set forth above, reduction of air permeability of a functional layer can be effectively suppressed, and reduction of ion conductivity of the functional layer can be effectively suppressed. As a result, electrochemical characteristics (particularly output characteristics) of an electrochemical device can be improved. Adhesiveness of a functional layer can also be improved.

On the other hand, when the volume particle diameter D50 of the particulate binder is not more than any of the upper limits set forth above, contact area with the particulate polymer and the like can be sufficiently ensured, and shedding of the particulate polymer and the like from a functional layer can be effectively inhibited.

The volume particle diameter D50 of the particulate binder referred to in the present specification means the particle diameter at which, in a particle size distribution (by volume) obtained through measurement by laser diffraction, cumulative volume calculated from a small diameter end of the distribution reaches 50%, and can be measured according to a method described in the EXAMPLES section.

<<Chemical composition of polymer contained in constituent particles of particulate binder>>

Although no specific limitations are placed on a polymer (hereinafter, also referred to as "polymer B") that is contained in constituent particles of the particulate binder, the polymer may be a known polymer that is water-insoluble and that can be dispersed in water. For example, the polymer may be a binder resin such as a thermoplastic elastomer. The thermoplastic elastomer is preferably a conjugated diene polymer or an acrylic polymer (ACL).

Note that one of these particulate binders may be used individually, or two or more of these particulate binders may be used in combination in a freely selected ratio.

The term "acrylic polymer" refers to a polymer that includes a (meth)acrylic acid alkyl ester monomer unit. Besides a (meth)acrylic acid alkyl ester monomer unit, the acrylic polymer may optionally include monomer units such as an acid group-containing monomer unit, a cross-linkable monomer unit, and a nitrile group-containing monomer unit.

The term "conjugated diene polymer" refers to a polymer that includes a conjugated diene monomer unit. Besides a conjugated diene monomer unit, the conjugated diene polymer may include monomer units such as an aromatic monovinyl monomer unit, an acid group-containing monomer unit, and a hydroxy group-containing monomer unit.

Specific examples of the conjugated diene polymer include, but are not specifically limited to, a styrene-butadiene copolymer (SBR), butadiene rubber (BR), acrylic rubber (NBR) (copolymer including an acrylonitrile unit and a butadiene unit), and hydrogenated products thereof.

-(Meth)acrylic acid alkyl ester monomer unit-

Examples of (meth)acrylic acid alkyl ester monomers that can form a (meth)acrylic acid alkyl ester monomer unit that can be included in the polymer B include the same (meth)acrylic acid alkyl ester monomers as listed for the polymer A.

n-Butyl acrylate is preferable as a (meth)acrylic acid alkyl ester monomer that can be used in the polymer B.

The proportional content of (meth)acrylic acid alkyl ester monomer units in the polymer B when all repeating units in the polymer B are taken to be 100 mass% is preferably 60 mass% or more, and more preferably 80 mass% or more, and is preferably 98 mass% or less, and more preferably 95 mass% or less.

-Acid group-containing monomer unit-

Examples of acid group-containing monomers that can form an acid group-containing monomer unit that can be included in the polymer B include the same acid group-containing monomers as listed for the water-soluble polymer.

A carboxy group-containing monomer is preferable as an acid group-containing monomer that can be used in the polymer B. Of carboxy group-containing monomers, methacrylic acid and itaconic acid are preferable.

The proportional content of acid group-containing monomer units in the polymer B when all repeating units in the polymer B are taken to be 100 mass% is preferably 0.5 mass% or more, and more preferably 2 mass% or more, and is preferably 10 mass% or less, and more preferably 3.5 mass% or less.

-Cross-linkable monomer unit-

Examples of cross-linkable monomers that can form a cross-linkable monomer unit that can be included in the polymer B include the same cross-linkable monomers as listed for the polymer A.

A (meth)acrylic acid allyl ester monomer or an epoxy group-containing ethylenically unsaturated monomer is preferable as a cross-linkable monomer that can be used in the polymer B. The (meth)acrylic acid allyl ester monomer is preferably allyl methacrylate, and the epoxy group-containing ethylenically unsaturated monomer is preferably allyl glycidyl ether.

Note that although one cross-linkable monomer may be used individually, or two or more cross-linkable monomers may be used in combination in a freely selected ratio, it is preferable that two or more cross-linkable monomers are used in combination. In particular, allyl methacrylate and allyl glycidyl ether are preferably used in combination as cross-linkable monomers that can be used in the polymer B.

The proportional content of cross-linkable monomer units in the polymer B (total proportion in a case in which two or more types are included) when all repeating units in the polymer B are taken to be 100 mass% is preferably 1 mass% or more, and more preferably 2 mass% or more, and is preferably 10 mass% or less, and more preferably 4 mass% or less.

-Nitrile group-containing monomer unit-

Examples of nitrile group-containing monomers that can form a nitrile group-containing monomer unit that can be included in the polymer B include the same nitrile group-containing monomers as listed for the polymer A.

Acrylonitrile is preferable as a nitrile group-containing monomer that can be used in the polymer B.

The proportional content of nitrile group-containing monomer units in the polymer B when all repeating units in the polymer B are taken to be 100 mass% is preferably 0.5 mass% or more, and more preferably 1 mass% or more, and is preferably 7 mass% or less, and more preferably 3 mass% or less.

-Conjugated diene monomer unit-

Examples of conjugated diene monomers that can form a conjugated diene monomer unit that can be included in the polymer B include aliphatic conjugated diene monomers such as 1,3-butadiene, 2-methyl-1,3-butadiene, 2,3-dimethyl-1,3-butadiene, and 2-chloro-1,3-butadiene. Of these examples, 1,3-butadiene is preferable as a conjugated diene monomer.

Note that one of these conjugated diene monomers may be used individually, or two or more of these conjugated diene monomers may be used in combination in a freely selected ratio.

The proportional content of conjugated diene monomer units in the polymer B when all repeating units in the polymer B are taken to be 100 mass% is preferably 15 mass% or more, and more preferably 30 mass% or more, and is preferably 60 mass% or less, and more preferably 40 mass% or less.

-Aromatic monovinyl monomer unit-

Examples of aromatic monovinyl monomers that can form an aromatic monovinyl monomer unit that can be included in the polymer B include the same aromatic monovinyl monomers as listed for the polymer A.

Styrene is preferable as an aromatic monovinyl monomer that can be used in the polymer B.

The proportional content of aromatic monovinyl monomer units in the polymer B when all repeating units in the polymer B are taken to be 100 mass% is preferably 40 mass% or more, and more preferably 60 mass% or more, and is preferably 80 mass% or less, and more preferably 70 mass% or less.

-Hydroxy group-containing monomer unit-

Examples of hydroxy group-containing monomers that can form a hydroxy group-containing monomer unit that can be included in the polymer B include the same hydroxy group-containing monomers as listed for the water-soluble polymer.

An alkanol ester of an ethylenically unsaturated carboxylic acid is preferable, and 2-hydroxyethyl acrylate is more preferable as a hydroxy group-containing monomer that can be used in the polymer B.

The proportional content of hydroxy group-containing monomer units in the polymer B when all repeating units in the polymer B are taken to be 100 mass% is preferably 0.1 mass% or more, and more preferably 0.5 mass% or more, and is preferably 5 mass% or less, and more preferably 2 mass% or less.

<<Production method of particles containing polymer B>>

The particles containing the polymer B can be produced through polymerization of a monomer composition containing the above-described monomers, carried out in an aqueous solvent such as water, for example, but is not specifically limited to being produced in this manner. The proportion constituted by each monomer in the monomer composition is normally the same as the proportion constituted by each monomer unit in the polymer B.

Moreover, the polymerization method and the polymerization reaction can be any of the polymerization methods and polymerization reactions that were given for the polymerization method of the previously described particulate polymer, for example, but are not specifically limited thereto.

<<Content of particulate binder>>

The content of the particulate binder in the binder composition is preferably 1 part by mass or more, more preferably 3 parts by mass or more, and even more preferably 4 parts by mass or more per 100 parts by mass of the particulate polymer, and is preferably 20 parts by mass or less, and more preferably 15 parts by mass or less per 100 parts by mass of the particulate polymer.

When the content of the particulate binder in the binder composition is not less than any of the lower limits set forth above, long-term redispersibility of the binder composition can be improved.

On the other hand, when the content of the particulate binder in the binder composition is not more than any of the upper limits set forth above, raising of a resistance value in an electrochemical device can be effectively suppressed, and cycle characteristics of the electrochemical device can be improved.

<Amine compound>

The presently disclosed binder composition preferably further contains an amine compound. When the binder composition further contains an amine compound, decay or the like of the binder composition can be inhibited, and preservation stability of the binder composition can be improved.

The amine compound is not specifically limited and may be hydroxylamine sulfate, diethylhydroxylamine, dimethylhydroxylamine, dipropylhydroxylamine, isopropylhydroxylamine, an isothiazoline compound, or the like, for example. Of these amine compounds, an isothiazoline compound is preferable because this enables further improvement of preservation stability of the binder composition. Note that the isothiazoline compound may be 1,2-benzo-4-isothiazolin-3-one, 2-methyl-4-isothiazolin-3-one, or the like, for example.

One of these amine compounds may be used individually, or two or more of these amine compounds may be used in combination in a freely selected ratio.

The content of the amine compound is preferably 0.3 parts by mass or more, and more preferably 0.5 parts by mass or more per 100 parts by mass of the particulate polymer, and is preferably 2 parts by mass or less, and more preferably 1 part by mass or less per 100 parts by mass of the particulate polymer.

<Other components>

No specific limitations are placed on other components that can optionally be contained in the presently disclosed binder composition so long as they do not affect electrochemical reactions in an electrochemical device, and examples of such other components include known additives such as dispersants, viscosity modifiers, and wetting agents, and also solvents other than water. One of these other components may be used individually, or two or more of these other components may be used in combination.

Examples of solvents other than water that may be used include organic solvents such as alicyclic hydrocarbons (cyclopentane, cyclohexane, etc.), aromatic hydrocarbons (toluene, xylene, etc.), ketones (ethyl methyl ketone, cyclohexanone, etc.), esters (ethyl acetate, butyl acetate, $\gamma$-butyrolactone, $\varepsilon$-caprolactone, etc.), nitriles (acetonitrile, propionitrile, etc.), ethers (tetrahydrofuran, etc.), and alcohols (methanol, ethanol, isopropanol, etc.).

The content of other components in the binder composition is preferably 1.0 parts by mass or less, more preferably 0.5 parts by mass or less, even more preferably 0.1 parts by mass or less, and particularly preferably 0 parts by mass per 100 parts by mass of the particulate polymer. In other words, it is particularly preferable that the binder composition does not contain other components.

<Properties of binder composition for electrochemical device functional layer>

The pH of the binder composition is preferably 5.5 or higher, more preferably 6.0 or higher, and even more preferably 6.5 or higher, and is preferably 12.0 or lower, more preferably 10.0 or lower, and even more preferably 8.8 or lower.

When the pH of the binder composition is within any of the ranges set forth above, aggregation of solid content such as the particulate polymer contained in the binder composition can be inhibited, and coating stability can be improved.

The viscosity of the binder composition is preferably 0.5 mPa·s or more, and more preferably 1.5 mPa·s or more, and is preferably 10 mPa·s or less, more preferably 8 mPa·s or less, and more preferably 5 mPa·s or less.

When the viscosity of the binder composition is within any of the ranges set forth above, coating stability can be improved.

<Solid content concentration of binder composition for electrochemical device functional layer>

The solid content concentration of the binder composition is preferably 10.0 mass% or more, and more preferably 15.5 mass% or more, and is preferably 50.0 mass% or less, more preferably 35.0 mass% or less, and even more preferably 25.0 mass% or less.

When the solid content concentration of the binder composition is not less than any of the lower limits set forth above, the number of applications in formation of a functional layer can be reduced, and functional layer productivity can be improved.

On the other hand, when the solid content concentration of the binder composition is not more than any of the upper limits set forth above, long-term redispersibility and short-term redispersibility of the binder composition can be improved.

<Production method of binder composition for electrochemical device functional layer>

No specific limitations are placed on the method by which the binder composition is produced. For example, the binder composition can be produced by mixing the above-described particulate polymer, the water-soluble polymer, water, and also the particulate binder, amine compound, and other components that are used as necessary. Note that in a situation in which the particulate polymer, water-soluble polymer, or particulate binder has been produced through polymerization of a monomer composition in an aqueous solvent, the particulate polymer, water-soluble polymer, or particulate binder may be mixed with other components while still in the form of a water dispersion.

Although no specific limitations are placed on the mixing method of these components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

(Slurry composition for electrochemical device functional layer)

The presently disclosed slurry composition for an electrochemical device functional layer contains the presently disclosed binder composition set forth above and non-conductive heat-resistant particles. In other words, the presently disclosed slurry composition contains a particulate polymer, a water-soluble polymer, non-conductive heat-resistant particles, and water, and can optionally further contain a particulate binder, an amine compound, and so forth.

A slurry composition such as set forth above can cause a functional layer to display excellent adhesiveness.

Note that the presently disclosed slurry composition may further contain other components besides the components described above.

<Non-conductive heat-resistant particles>

The non-conductive heat-resistant particles that are contained in the presently disclosed slurry composition are particles that can impart heat resistance to a functional layer.

The term "non-conductive heat-resistant particles" as used in the present specification refers to fine particles that have a heat-resistance temperature of 200°C or higher and that are not electrically conductive. Moreover, the term "heat-resistance temperature" refers to a temperature that does not instigate substantial physical change such as thermal deformation.

Although no specific limitations are placed on the non-conductive heat-resistant particles so long as they are fine particles that have a heat-resistance temperature of 200°C or higher, are electrochemically stable, and are electrically insulating, the non-conductive heat-resistant particles are preferably inorganic particles.

Since inorganic particles have a comparatively large specific gravity, this makes it easier for the particulate polymer to protrude relative to the inorganic particles at a thickness direction surface of a functional layer in a situation in which a functional layer is formed through application or the like of the slurry composition containing the inorganic particles on a substrate, for example, and, as a result, can improve adhesiveness of the functional layer.

The material of the inorganic particles is preferably an electrochemically stable material that is stably present in the environment of use of an electrochemical device. For example, the inorganic particles may be particles of an oxide such as aluminum oxide (alumina), hydrous aluminum oxide (boehmite (AlOOH)), gibbsite (Al(OH)$_3$), silicon oxide, magnesium oxide (magnesia), magnesium hydroxide, calcium oxide, titanium oxide (titania), barium titanate (BaTiO$_3$), zirconium oxide (ZrO), or alumina-silica composite oxide; particles of a nitride such as aluminum nitride or boron nitride; particles of covalently bonded crystals such as silicon or diamond; particles of sparingly soluble ionic crystals such as barium sulfate, calcium fluoride, or barium fluoride; or fine particles of clay such as talc or montmorillonite. Of these examples, aluminum oxide, hydrous aluminum oxide (boehmite), magnesium hydroxide, and barium sulfate are more preferable, and aluminum oxide is even more preferable. These particles may be subjected to element substitution, surface treatment, solid solution treatment, or the like as necessary.

Note that one of these types of inorganic particles may be used individually, or two or more of these types of inorganic particles may be used in combination in a freely selected ratio.

The volume particle diameter D50 of the non-conductive heat-resistant particles is preferably 0.1 $\mu$m or more, more preferably 0.15 $\mu$m or more, and even more preferably 0.2 $\mu$m or more, and is preferably 1.5 $\mu$m or less, more preferably 1.0 $\mu$m or less, and even more preferably 0.8 $\mu$m or less.

When the volume particle diameter D50 of the non-conductive heat-resistant particles is not less than any of the lower limits set forth above, the non-conductive heat-resistant particles densely pack into a functional layer. Consequently, reduction of ion conductivity of the functional layer can be further suppressed, and electrochemical characteristics (particularly output characteristics) of an electrochemical device can be improved.

On the other hand, when the volume particle diameter D50 of the non-conductive heat-resistant particles is not more than any of the upper limits set forth above, it is possible to cause a functional layer to display excellent heat resistance even with a thin functional layer.

The volume particle diameter D50 of the non-conductive heat-resistant particles referred to in the present specification means the particle diameter at which, in a particle size distribution (by volume) obtained through measurement by laser diffraction, cumulative volume calculated from a small diameter end of the distribution reaches 50%, and can be measured according to a method described in the EXAMPLES section.

<Other components>

No specific limitations are placed on other components that can optionally be contained in the presently disclosed slurry composition so long as they do not affect electrochemical reactions in an electrochemical device, and examples of such other components include dispersants and thickeners. One of these other components may be used individually, or two or more of these other components may be used in combination.

<Volume ratio of particulate polymer and non-conductive heat-resistant particles>

A volume ratio of the particulate polymer and the non-conductive heat-resistant particles (volume of particulate polymer/volume of non-conductive heat-resistant particles) in the slurry composition is preferably 1/99 or more, more preferably 3/97 or more, even more preferably 5/95 or more, and further preferably 8/92 or more, and is preferably 60/40 or less, more preferably 50/50 or less, even more preferably 40/60 or less, and further preferably 30/70 or less.

When the above-described volume ratio in the slurry composition is not less than any of the lower limits set forth above, the particulate polymer is sufficiently present in a functional layer formed using the slurry composition, thereby enabling improvement of adhesiveness of the functional layer.

On the other hand, when the above-described volume ratio in the slurry composition is not more than any of the upper limits set forth above, the non-conductive heat-resistant particles are sufficiently present in a functional layer formed using the slurry composition, thereby enabling improvement of heat resistance of the functional layer.

<Contents of components in slurry composition for electrochemical device functional layer>

The content of the water-soluble polymer in the slurry composition is preferably 1.0 parts by mass or more, and more preferably 1.5 parts by mass or more per 100 parts by mass of the non-conductive heat-resistant particles, and is preferably 5.0 parts by mass or less, and more preferably 4.0 parts by mass or less per 100 parts by mass of the non-conductive heat-resistant particles.

When the content of the water-soluble polymer in the slurry composition is not less than any of the lower limits set forth above, heat resistance of a functional layer can be increased.

On the other hand, when the content of the water-soluble polymer in the slurry composition is not more than any of the upper limits set forth above, raising of a resistance value in an electrochemical device can be effectively suppressed, and cycle characteristics of the electrochemical device can be improved.

In a case in which the slurry composition contains the particulate binder, the content of the particulate binder in the slurry composition is preferably 0.5 parts by mass or more, more preferably 1.0 parts by mass or more, even more preferably 2.0 parts by mass or more, further preferably 2.2 parts by mass or more, and even further preferably 2.5 parts by mass or more per 100 parts by mass of the particulate polymer, and is preferably 6.0 parts by mass or less, more preferably 5.5 parts by mass or less, even more preferably 5.0 parts by mass or less, and further preferably 4.5 parts by mass or less per 100 parts by mass of the particulate polymer.

When the content of the particulate binder in the slurry composition is not less than any of the lower limits set forth above, the particulate binder is sufficiently present in a functional layer formed using the slurry composition, thereby enabling improvement of adhesiveness of the functional layer.

On the other hand, when the content of the particulate binder in the slurry composition is not more than any of the upper limits set forth above, the non-conductive heat-resistant particles are sufficiently present in a functional layer formed using the slurry composition, thereby enabling improvement of heat resistance of the functional layer.

<Solid content concentration of slurry composition for electrochemical device functional layer>

The solid content concentration of the slurry composition is preferably 10.0 mass% or more, and more preferably 20.0 mass% or more, and is preferably 70.0 mass% or less, and more preferably 50.0 mass% or less.

<Production method of slurry composition for electrochemical device functional layer>

The slurry composition can be produced through appropriate mixing of the binder composition and the non-conductive heat-resistant particles, for example, but is not specifically limited to being produced in this manner. Alternatively, a non-conductive heat-resistant particle-containing composition that contains non-conductive heat-resistant particles and can optionally contain a water-soluble polymer, a particulate polymer, water, and other components can be used to produce the slurry composition through mixing of this non-conductive heat-resistant particle-containing composition with the binder composition.

Although no specific limitations are placed on the mixing method of these components, the mixing is preferably performed using a disperser as a mixing device in order to efficiently disperse the components. The disperser is preferably a device that can uniformly disperse and mix the components. Examples of dispersers that can be used include a ball mill, a sand mill, a pigment disperser, a grinding machine, an ultrasonic disperser, a homogenizer, and a planetary mixer.

(Laminate for electrochemical device)

The presently disclosed laminate for an electrochemical device includes a substrate and a functional layer formed on the substrate, wherein the functional layer is obtained using the presently disclosed binder composition set forth above or the presently disclosed slurry composition set forth above. Since the presently disclosed binder composition and the presently disclosed slurry composition (hereinafter, also referred to collectively as a "composition for a functional layer") can form a functional layer having excellent adhesiveness, a laminate that includes a functional layer obtained using this composition for a functional layer can improve electrochemical characteristics (for example, cycle characteristics and output characteristics) of an electrochemical device including the laminate for an electrochemical device.

<Substrate>

No specific limitations are placed on the substrate. For example, a separator substrate can be used as the substrate in a case in which the functional layer is used as a member that constitutes part of a separator, and an electrode substrate obtained by forming an electrode mixed material layer on a current collector can be used as the substrate in a case in which the functional layer is used as a member that constitutes part of an electrode. No specific limitations are placed on how the laminate obtained by forming the functional layer on the substrate using the composition for a functional layer is used. For example, the functional layer may be formed on a separator substrate or the like, and then the resultant laminate may be used in that form as a battery member such as a separator, or the functional layer may be formed on an electrode substrate and then the resultant laminate may be used in that form as an electrode.

<<Separator substrate>>

The separator substrate on which the functional layer is formed is not specifically limited and can be any of those described in JP2012-204303A, for example. Of these separator substrates, a microporous membrane made of polyolefinic (polyethylene, polypropylene, polybutene, or polyvinyl chloride) resin is preferred because such a membrane can reduce the total thickness of a separator, which increases the ratio of electrode active material in an electrochemical device, and thereby increases the volumetric capacity of the electrochemical device. Note that the separator substrate may include any layer other than the functional layer that can display an expected function in part thereof.

<<Electrode substrate>>

The electrode substrate (positive electrode substrate or negative electrode substrate) on which the functional layer is formed is not specifically limited and may be an electrode substrate that is obtained by forming an electrode mixed material layer on a current collector. The current collector, components in the electrode mixed material layer (for example, an electrode active material (positive electrode active material or negative electrode active material) and a binder for an electrode mixed material layer (binder for a positive electrode mixed material layer or binder for a negative electrode mixed material layer)), and the method by which the electrode mixed material layer is formed on the current collector can be known examples thereof such as any of those described in JP2013-145763A, for example. Note that the electrode substrate may include any layer other than the functional layer that can display an expected function in part thereof.

<Functional layer>

The functional layer can be formed on the above-described substrate using the presently disclosed composition for a functional layer. In a case in which the functional layer is formed using the presently disclosed binder composition, the functional layer contains at least the previously described particulate polymer and water-soluble polymer and also contains the particulate binder, amine compound, and other components that are used as necessary, and in a case in which the functional layer is formed using the presently disclosed slurry composition, the functional layer contains at least the previously described particulate polymer, water-soluble polymer, and non-conductive heat-resistant particles and also contains the particulate binder, amine compound, and other components that are used as necessary. Note that components contained in the functional layer are components that were contained in the composition for a functional layer described above, and the preferred ratio of each of these components is the same as the preferred ratio of the component in the composition for a functional layer.

<<Formation method of functional layer>>

Examples of methods by which the functional layer may be formed on the substrate using the composition for a functional layer include, but are not specifically limited to:

(1) a method in which the composition for a functional layer is applied onto the surface of the above-described substrate and is then dried;
(2) a method in which the above-described substrate is immersed in the composition for a functional layer and is then dried; and
(3) a method in which the composition for a functional layer is applied onto a releasable substrate and is dried to form a functional layer that is then transferred onto the surface of the above-described substrate.

Note that a functional layer may be formed on just one side of the substrate, or functional layers may be formed on both sides of the substrate.
A known releasable substrate can be used as the releasable substrate without any specific limitations.
Of these methods, method (1) is preferable due to ease of controlling the thickness of the functional layer. Moreover, method (1) may, for example, include a step of applying the composition for a functional layer onto the substrate (application step) and a step of drying the composition for a functional layer that has been applied onto the substrate to form a functional layer (functional layer formation step).

-Application step-

Examples of methods by which the composition for a functional layer can be applied onto the substrate in the application step include, but are not specifically limited to, doctor blading, reverse roll coating, direct roll coating, gravure coating, extrusion coating, and brush coating.

-Functional layer formation step-

The composition for a functional layer on the substrate can be dried by any commonly known method in the functional layer formation step without any specific limitations. For example, the drying method may be drying by warm, hot, or low-humidity air; drying in a vacuum; or drying by irradiation with infrared light, electron beams, or the like. Although no specific limitations are placed on the drying conditions, the drying temperature is preferably not lower than 50°C and not higher than 150°C, and the drying time is preferably not less than 1 minute and not more than 30 minutes.
In a case in which the functional layer is formed on the substrate using the presently disclosed binder composition as the composition for a functional layer, an adhesive layer can be obtained as the functional layer.
Moreover, in a case in which the functional layer is formed on the substrate using the presently disclosed slurry composition as the composition for a functional layer, a single layer in which a function of a heat-resistant layer that increases heat resistance of the substrate and a function of an adhesive layer that strongly adheres members to each other are simultaneously expressed can be obtained as the functional layer.

Note that a substrate including a functional layer formed using the presently disclosed slurry composition in this manner has high producibility because production with reduced man-hours and time is possible as compared to a conventional substrate that includes a heat-resistant layer and an adhesive layer.

<<Thickness of functional layer>>

In a functional layer formed using the presently disclosed slurry composition, a plurality of non-conductive heat-resistant particles are normally stacked on one another in a thickness direction of the functional layer. The thickness of a layer (hereinafter, also referred to as a "heat-resistant particle layer") resulting from stacking of the non-conductive heat-resistant particles in the thickness direction of the functional layer is preferably 0.5 $\mu$m or more, more preferably 0.8 $\mu$m or more, and even more preferably 1 $\mu$m or more, and is preferably 6 $\mu$m or less, more preferably 5 $\mu$m or less, and even more preferably 4 $\mu$m or less.

When the thickness of the heat-resistant particle layer is not less than any of the lower limits set forth above, the functional layer has extremely good heat resistance.

On the other hand, when the thickness of the heat-resistant particle layer is not more than any of the upper limits set forth above, ion diffusivity of the functional layer can be ensured, and electrochemical characteristics (particularly output characteristics) of an electrochemical device can be more sufficiently enhanced.

Note that the "thickness of the heat-resistant particle layer" referred to in the present specification can be measured by a method described in the EXAMPLES section of the present specification.

The maximum thickness of the functional layer formed on the substrate is preferably 1.0 $\mu$m or more, more preferably 1.5 $\mu$m or more, even more preferably 2.0 $\mu$m or more, particularly preferably 2.5 $\mu$m or more, and most preferably 5.0 $\mu$m or more, and is preferably 10.0 $\mu$m or less, more preferably 9.0 $\mu$m or less, and even more preferably 8.0 $\mu$m or less.

Note that the "maximum thickness of the functional layer" referred to in the present specification can be measured using a field emission scanning electron microscope (FE-SEM), for example.

(Electrochemical device)

The presently disclosed electrochemical device is an electrochemical device that includes the presently disclosed laminate for an electrochemical device. An electrochemical device such as set forth above can display excellent cycle characteristics.

Note that the presently disclosed electrochemical device should at least include the presently disclosed laminate, and, therefore, may also include constituent elements other than the presently disclosed laminate so long as the effects according to the present disclosure are not significantly lost.

The presently disclosed electrochemical device may be, but is not specifically limited to, a lithium ion secondary battery or an electric double-layer capacitor, for example, and is preferably a lithium ion secondary battery.

The following describes a lithium ion secondary battery as one example of the presently disclosed electrochemical device. A lithium ion secondary battery according to the present disclosure is a lithium ion secondary battery that includes the presently disclosed laminate set forth above. More specifically, the lithium ion secondary battery includes a positive electrode, a negative electrode, a functional layer-equipped separator (presently disclosed laminate) having a functional layer formed on a separator substrate, and an electrolyte solution. Note that a functional layer may be formed on just one side of the separator substrate, or functional layers may be formed on both sides of the separator substrate.

Also note that although the functional layer is formed on the separator substrate in the following example, the functional layer may be formed on an electrode substrate.

In the lithium ion secondary battery according to the present disclosure, the functional layer causes strong close adherence between the positive electrode and the separator substrate and/or between the negative electrode and the separator substrate in the electrolyte solution. Consequently, widening of the distance between electrode plates of the electrodes in accompaniment to repeated charging and discharging is inhibited, and the lithium ion secondary battery has good battery characteristics such as cycle characteristics. The functional layer also improves heat resistance of the separator substrate in this lithium ion secondary battery. Moreover, the time required for producing the separator in this lithium ion secondary battery can be shortened, thereby enabling production with high productivity as compared to a situation in which a conventional separator that includes a heat-resistant layer and an adhesive layer is used.

Note that known positive electrodes, negative electrodes, and electrolyte solutions that are used in lithium ion secondary batteries can be used as the aforementioned positive electrode, negative electrode, and electrolyte solution.

<Positive electrode and negative electrode>

Specifically, an electrode that is obtained by forming an electrode mixed material layer on a current collector can be used as each of the electrodes (positive electrode and negative electrode). The current collector may be made of a metal material such as iron, copper, aluminum, nickel, stainless steel, titanium, tantalum, gold, or platinum. Of these metal materials, the current collector for the negative electrode is preferably made of copper. Moreover, the current collector for the positive electrode is preferably made of aluminum. The electrode mixed material layer can be a layer containing an electrode active material and a binder.

<Functional layer-equipped separator (laminate)>

The functional layer-equipped separator can be produced by forming a functional layer on a separator substrate by the method of forming a functional layer that was described above, for example.

The separator substrate can be any of those that are described in JP2012-204303A, for example, without any specific limitations. Of these separator substrates, a microporous membrane made of a polyolefinic resin (polyethylene, polypropylene, polybutene, or polyvinyl chloride) is preferred from a viewpoint that the total thickness of the functional layer-equipped separator can be reduced, thereby increasing the ratio of electrode active material in the lithium ion secondary battery and increasing the volumetric capacity of the lithium ion secondary battery.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. In particular, $LiPF_6$, $LiClO_4$, and $CF_3SO_3Li$ are preferable because they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), methyl ethyl carbonate (ethyl methyl carbonate (EMC)), and vinylene carbonate; esters such as γ-butyrolactone and methyl formate; ethers such as 1,2-dimethoxyethane and tetrahydrofuran; and sulfur-containing compounds such as sulfolane and dimethyl sulfoxide.

Furthermore, a mixture of these organic solvents may be used. Of these organic solvents, carbonates are preferable due to having high permittivity and a wide stable potential region. In general, lithium ion conductivity tends to increase when an organic solvent having a low viscosity is used. Therefore, lithium ion conductivity can be adjusted through the type of organic solvent that is used.

The concentration of the electrolyte in the electrolyte solution can be adjusted as appropriate. Furthermore, known additives may be added to the electrolyte solution.

<Production method of lithium ion secondary battery>

The lithium ion secondary battery that is an example of the presently disclosed electrochemical device can be produced by, for example, stacking the above-described positive electrode and negative electrode with the functional layer-equipped separator (presently disclosed laminate) in-between, performing rolling, folding, or the like of the resultant stack as necessary to place the stack in a battery container, injecting the electrolyte solution into the battery container, and sealing the battery container. In order to prevent pressure increase inside the battery and occurrence of overcharging or overdischarging, an expanded metal; an overcurrent preventing device such as a fuse or a PTC device; a lead plate; or the like may be placed in the battery container as necessary. The shape of the battery may be a coin type, a button type, a sheet type, a cylinder type, a prismatic type, or a flat type, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted in the polymer by a structural unit formed through polymerization of a given monomer is normally, unless otherwise specified, the same as the ratio (charging ratio) of the given monomer among all monomers used in polymerization for forming the polymer.

In the examples and comparative examples, the methods described below were used to measure and evaluate the glass-transition temperature of a particulate polymer, the volume particle diameter D50 of a particulate polymer, the volume particle diameter D50 of a particulate binder, the volume particle diameter D50 of non-conductive heat-resistant particles, the true specific gravity of a particulate polymer, the average circularity and median circularity of a particulate polymer, the weight-average molecular weight of a water-soluble polymer, the pH of a binder composition, the viscosity of a binder composition, the thickness of a functional layer (heat-resistant particle layer), the volume ratio of non-conductive heat-resistant fine particles and a particulate polymer, the long-term redispersibility of a binder composition, the adhesiveness of a functional layer, and the shedding resistance of a particulate polymer in a functional layer.

<Glass transition temperature of particulate polymer>

A particulate polymer produced in each example or comparative example was taken as a measurement sample, and the glass-transition temperature of the particulate polymer was measured.

Specifically, 10 mg of the measurement sample was weighed into an aluminum pan and was measured by a differential scanning calorimeter (EXSTAR DSC6220 produced by SII NanoTechnology Inc.) under conditions prescribed in JIS Z8703 with a measurement temperature range of -100°C to 500°C and a heating rate of 10°C/min to obtain a differential scanning calorimetry (DSC) curve. Note that an empty aluminum pan was used as a reference. On the obtained differential scanning calorimetry (DSC) curve, an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C) of the particulate polymer.

Note that for Example 18, the glass-transition temperature of an obtained polyester polymer was determined by the same method as described above, and the determined glass-transition temperature was taken to be the glass-transition temperature of a particulate polymer in Example 18.

<Volume particle diameter D50 of particulate polymer>

A particulate polymer produced in each example or comparative example was taken as a measurement sample, and the volume particle diameter D50 of the particulate polymer was measured.

Specifically, the measurement sample was weighed out in an amount equivalent to 0.1 g, was taken into a beaker, and 0.1 mL of alkylbenzenesulfonic acid aqueous solution (DRIWEL produced by FUJIFILM Corporation) as a dispersant was added thereto. In addition, 10 mL to 30 mL of a diluent (ISOTON II produced by Beckman Coulter, Inc.) was added into the beaker, and 3 minutes of dispersing was performed by a 20 W (Watt) ultrasonic disperser. Thereafter, a particle size analyzer (Multisizer produced by Beckman Coulter, Inc.) was used to perform measurement under conditions of an aperture diameter of 20 $\mu$m, a medium of ISOTON II, and a measured particle count of 100,000. In a particle size distribution (by volume) of the particulate polymer obtained through this measurement, the particle diameter D50 at which cumulative volume calculated from a small diameter end of the distribution reached 50% was taken to be the volume particle diameter D50 of the particulate polymer.

<Volume particle diameter D50 of particulate binder>

The volume particle diameter D50 of a particulate binder produced in each example or comparative example was measured by laser diffraction.

Specifically, a produced water dispersion (adjusted to a solid content concentration of 0.1 mass%) containing the particulate binder was taken as a sample. Measurement was then performed using a laser diffraction particle size analyzer (LS-230 produced by Beckman Coulter, Inc.). In a particle size distribution (by volume) of the particulate binder obtained through this measurement, the particle diameter D50 at which cumulative volume calculated from a small diameter end of the distribution reached 50% was taken to be the volume particle diameter D50 of the particulate binder.

<Volume particle diameter D50 of non-conductive heat-resistant particles>

The volume particle diameter D50 of non-conductive heat-resistant particles used in each example or comparative example was measured by laser diffraction.

Specifically, in a particle size distribution (by volume) of the non-conductive heat-resistant particles obtained through measurement by laser diffraction, the particle diameter (D50) at which cumulative volume calculated from a small diameter end of the distribution reached 50% was taken to be the volume particle diameter D50 of the non-conductive heat-resistant particles.

<True specific gravity of particulate polymer>

The true specific gravity of a particulate polymer produced in each example or comparative example was measured in accordance with JIS K8837 by a pycnometer method.

Specifically, the true specific gravity of the particulate polymer at a temperature of 25°C was measured using a pycnometer (BELPYCNO L produced by MicrotracBEL Corp.).

<Average circularity and median circularity of particulate polymer>

A particulate polymer produced in each example or comparative example was taken as a measurement sample, and the average circularity and median circularity of the particulate polymer were measured.

Specifically, a vessel was charged with 10 mL of deionized water in advance, and then 0.02 g of a surfactant (alkylbenzenesulfonic acid) as a dispersant was added thereto, 0.02 g of the measurement sample was further added, and 3 minutes of dispersing treatment was performed at 60 W (Watt) using an ultrasonic disperser. A flow particle image analyzer (FPIA-3000 produced by Sysmex) was used to measure 1,000 to 10,000 particles of the measurement sample having a circle-equivalent diameter of 0.4 $\mu$m or more with the concentration of the measurement sample during measurement adjusted such as to be 3,000 particles/$\mu$L to 10,000 particles/$\mu$L. Note that the circularity is expressed by the following formula (I), the average circularity is a value obtained by taking the mean thereof, and the median circularity is the median thereof.

Circularity = Perimeter of circle of equal area to projected area of particulate polymer/Perimeter of projected image of particulate polymer (I)

<Weight-average molecular weight of water-soluble polymer>

The weight-average molecular weight of a water-soluble polymer produced in each example or comparative example was determined using an apparatus in which a multiangle light scattering detector (DAWN HELEOS II produced by Wyatt Technology Corporation) and a differential refractive index detector (Optilab T-rEX produced by Wyatt Technology Corporation) were connected to a gel permeation chromatograph. The measurement conditions were as follows.

Column: TSKgel GMPW$_{XL}$ $\times$ 2 columns ($\varnothing$ 7.8 mm $\times$ 30 cm; produced by Tosoh Corporation)
Solvent: 0.1 M sodium nitrate aqueous solution
Flow rate: 0.5 mL/mm
Column temperature: 45°C
Sample injection volume: 0.2 mL

Measurement sample preparation: First an aqueous solution containing the water-soluble polymer was dried. Next, 10 mL of 0.1 M sodium nitrate aqueous solution was added to 100 mg of the dried water-soluble polymer and was gently stirred therewith at room temperature to cause dissolution of the water-soluble polymer. The resultant solution was filtered using a 0.5 $\mu$m filter to obtain a measurement sample.

<pH of binder composition>

The pH of a binder composition obtained in each example or comparative example was measured using a pH meter.

Specifically, a benchtop pH meter (F-51 produced by Horiba, Ltd.) was calibrated using pH standards (pH 4, pH 7, and pH 9) having a temperature of 25°C and was then used to measure the pH of a sample (binder composition) having a temperature of 25°C.

<Viscosity of binder composition>

The viscosity of a binder composition obtained in each example or comparative example was measured using a B-type viscometer.

Specifically, a B-type viscometer (TVB-10M produced by Toki Sangyo Co., Ltd.) was used to measure the viscosity of a sample (binder composition) in accordance with JIS K7117-1 at a temperature of 25°C and a rotation speed of 60 rpm (spindle: L-adapter).

<Thickness of functional layer (heat-resistant particle layer)>

A cross-section of a functional layer-equipped separator was observed using a field emission scanning electron microscope (FE-SEM; JSM-7800 Prime produced by JEOL Ltd.; detector: BED-C; accelerating voltage: 5 kV; magnification: $\times$500), and the thickness of a functional layer (heat-resistant particle layer) was calculated from an obtained SEM image. Note that the thickness of the functional layer (heat-resistant particle layer) was taken to be the distance from the surface of a separator substrate where the functional layer was formed to a non-conductive heat-resistant particle separated furthest from the surface in a perpendicular direction.

<Volume ratio of particulate polymer and non-conductive heat-resistant fine particles>

A volume ratio (volume of particulate polymer/volume of non-conductive heat-resistant particles) of a particulate polymer and non-conductive heat-resistant particles (alumina) was determined from charged amounts of the particulate polymer and the non-conductive heat-resistant particles (alumina) in production of a slurry composition. Note that the density of alumina was taken to be 4 g/cm$^3$ in calculation.

<Long-term redispersibility of binder composition>

First, 5 kg of a binder composition obtained in each example or comparative example was loaded into a 5 L circular tube-shaped vessel, and this vessel was left at rest for 30 days. Note that a particulate polymer had sedimented in the binder composition after 30 days at rest. The liquid phase of the binder composition after 30 days at rest was sampled, the solid content concentration of the liquid phase was measured, and the solid content concentration was confirmed to have decreased relative to that before the binder composition was left at rest (i.e., straight after production of the binder composition).

Next, the binder composition that had been left at rest for 30 days was redispersed in a universal ball mill (rotation speed: rotation speed at inverter frequency of 30 Hz (maximum 60 Hz)), the liquid phase thereof was sampled at intervals of 15 minutes, and the solid content concentration of the liquid phase was measured. The time taken for the solid content concentration of the liquid phase to return to the solid content concentration before the binder composition was left at rest was confirmed and was evaluated by the following standard. A shorter time for the solid content concentration of the liquid phase to return to the solid content concentration before the binder composition was left at rest indicates that the binder composition has better long-term redispersibility.

    A: Less than 15 minutes
    B: Not less than 15 minutes and less than 30 minutes
    C: 30 minutes or more

<Adhesiveness of functional layer>

A functional layer-equipped separator produced in each example or comparative example was observed using a laser displacement microscope (produced by Keyence Corporation; model: VK-X1000). Arbitrary 100 $\mu$m square regions at the surface of the functional layer were observed at 10 locations, the arithmetic mean height Sa of the surface of the functional layer was calculated, and the arithmetic mean height Sa was evaluated by the following standard. A larger arithmetic mean height Sa indicates that there will be larger contact area with a battery member, and consequently better adhesiveness.

    A: Arithmetic mean height Sa of 1.5 $\mu$m or more
    B: Arithmetic mean height Sa of not less than 1.2 $\mu$m and less than 1.5 $\mu$m
    C: Arithmetic mean height Sa of not less than 1.0 $\mu$m and less than 1.2 $\mu$m
    D: Arithmetic mean height Sa of less than 1.0 $\mu$m

<Shedding resistance of particulate polymer in functional layer>

A field emission scanning electron microscope (FE-SEM; JSM-7800 Prime produced by JEOL Ltd.; detector: BED-C; accelerating voltage: 5 kV; magnification: $\times$500) was used to obtain an image with a viewing field range of 186 $\mu$m in height by 248 $\mu$m in width at 5 arbitrary locations at each of a front surface and a rear surface (i.e., 10 locations in total) of a functional layer-equipped separator produced in each example or comparative example.

Next, binarization was performed with respect to the images obtained for the 10 locations, and the area proportion occupied by particulate polymer and particle shedding sites was determined. Specifically, the binarization (threshold value 38) was performed using image analysis software (WinROOF produced by Mitani Corporation) with emphasis conditions set as "Brightness: -30" and "Contrast: +70", and with a filter set as 7×7 with two threshold values to obtain binarized images. Each of the obtained binarized images was used to determine the total area proportion occupied by particulate polymer and particle shedding sites per unit area of the surface of the functional layer in plan view of the surface of the functional layer, and an average value of proportions for the 10 locations was taken to be S1 (%).

Next, the emphasis conditions were changed to "Brightness: +30" and "Contrast: +70", and binarized images were obtained in the same manner as described above. Each of the obtained binarized images was used to determine the area proportion occupied by particle shedding sites per unit area of the surface of the functional layer in plan view of the surface of the functional layer, and an average value of proportions for the 10 locations was taken to be S2 (%).

The area proportion occupied by particle shedding sites among the total area of particulate polymer and particle shedding sites was calculated using the following formula (II). A smaller area proportion of particle shedding sites indicates that the particulate polymer remains well in the functional layer (i.e., that shedding of the particulate polymer is effectively inhibited).

$$\text{Area proportion of particle shedding sites (\%)} = S2/S1 \times 100 \quad \text{(II)}$$

A: Area proportion of particle shedding sites of less than 0.2%
B: Area proportion of particle shedding sites of not less than 0.2% and less than 1%
C: Area proportion of particle shedding sites of 1% or more

<Long-term aggregation inhibition of binder composition>

First, 100 g of a binder composition obtained in each example or comparative example was filtered using a 635 mesh (material: SUS316; wire size: 20 μm; opening size: 20 μm) that had been cut out as 10 cm-square, and then the 635 mesh was thermally dried in a 105°C oven for 30 minutes. In addition, the weight of the 635 mesh in an unused state was taken to be "A" g, the weight of the 635 mesh after thermal drying (with aggregates, etc. in the binder composition attached) was taken to be "B" g, the weight of the binder composition was taken to be "C" g (100 g), and the solid content concentration of the binder composition was taken to be "D" %, and these were used to determine the amount "M1" of aggregates straight after production from the following formula (III).

$$M1 = \{(B - A)/(C \times D/100)\} \quad \text{(III)}$$

Next, 5 kg of a binder composition obtained in each example or comparative example was loaded into a 5 L circular tube-shaped vessel, and this vessel was left at rest for 30 days. Note that a particulate polymer had sedimented in the binder composition after 30 days at rest. Next, the binder composition that had been left at rest for 30 days was redispersed in a universal ball mill (rotation speed: rotation speed at inverter frequency of 30 Hz (maximum 60 Hz)) until the solid content concentration of the liquid phase that had decreased due to sedimentation of the particulate polymer returned to the solid content concentration before the binder composition was left at rest, and then 100 g of the redispersed binder composition was filtered using a 635 mesh, and the 635 mesh was thermally dried in a 105°C oven for 30 minutes in the same manner as described above. In addition, the weight of the 635 mesh in an unused state was taken to be "a" g, the weight of the 635 mesh after thermal drying (with aggregates, etc. in the binder composition attached) was taken to be "b" g, the weight of the binder composition was taken to be "c" g (100 g), and the solid content concentration of the binder composition was taken to be "d" %, and these were used to determine the amount "M2" of aggregates after 30 days at rest from the following formula (IV).

$$M2 = \{(b - a)/(c \times d/100)\} \quad \text{(IV)}$$

The amount of change of aggregates in the binder composition was calculated using the following formula (V).

$$\text{Amount of change of aggregates (\%)} = M2/M1 \times 100 \quad \text{(V)}$$

A smaller value for the amount of change of aggregates indicates that the binder composition has better long-term aggregation inhibition.

A: Amount of change of aggregates of less than 90%
B: Amount of change of aggregates of not less than 90% and less than 110%

C: Amount of change of aggregates of 110% or more

(Example 1)

<Production of particulate polymer>

[Production of monomer composition]

A monomer composition was produced by mixing 72.8 parts of styrene as an aromatic monovinyl monomer, 16.7 parts of n-butyl acrylate as a (meth)acrylic acid alkyl ester monomer, and 10 parts of glycidyl methacrylate and 0.5 parts of ethylene glycol dimethacrylate as cross-linkable monomers.

[Production of metal hydroxide]

A colloidal dispersion liquid containing magnesium hydroxide as a metal hydroxide was produced by gradually adding an aqueous solution of 7.0 parts of sodium hydroxide dissolved in 50 parts of deionized water to an aqueous solution of 10.0 parts of magnesium chloride dissolved in 200 parts of deionized water under stirring.

[Suspension polymerization]

A particulate polymer was produced by suspension polymerization. Specifically, the monomer composition obtained as described above was added to the colloidal dispersion liquid containing magnesium hydroxide, was further stirred therewith, and then 3.0 parts of t-butyl peroxy-2-ethylhexanoate (PERBUTYL O produced by NOF Corporation) was added as a polymerization initiator to yield a mixture. The obtained mixture was subjected to 1 minute of high-shear stirring at a rotation speed of 12,000 rpm using an inline emulsifying/dispersing device (CAVITRON produced by Pacific Machinery & Engineering Co., Ltd.) so as to form droplets of the monomer composition in the colloidal dispersion liquid containing magnesium hydroxide.

The magnesium hydroxide-containing colloidal dispersion liquid in which droplets of the monomer composition had been formed was loaded into a reactor, was heated to 90°C, and was subjected to a polymerization reaction for 5 hours. The resultant dispersion liquid was subjected to 2 hours of reduced pressure treatment at 90°C using an evaporator to perform purification and yield a water dispersion containing a particulate polymer.

In addition, the water dispersion containing the particulate polymer was stirred while sulfuric acid was added dropwise at room temperature (25°C) so as to perform acid washing until the pH reached 6.5 or lower. Next, separation was performed by filtration, a slurry was reformed through addition of 500 parts of deionized water to the resultant solid content, and water washing treatment (washing, filtration, and dehydration) was repeated 10 times. Thereafter, separation was performed by filtration to obtain solid content that was then loaded into a vessel of a dryer and was dried at 40°C for 48 hours to obtain a dried particulate polymer. Note that the particulate polymer obtained in this manner is solid particles.

The obtained particulate polymer was used to measure the glass-transition temperature of the particulate polymer, the volume particle diameter D50 of the particulate polymer, the true specific gravity of the particulate polymer, and the average circularity and median circularity of the particulate polymer. The results are shown in Table 1.

<Production of aqueous solution containing water-soluble polymer>

A 10 L septum-equipped flask was charged with 6,335 g of deionized water and 170 g of a 2.0% aqueous solution of L-ascorbic acid as a polymerization accelerator. These materials were heated to a temperature of 40°C, and the inside of the flask was purged with nitrogen gas at a flow rate of 100 mL/min. Next, 1,300 g of acrylic acid as an acid group-containing monomer was injected into the flask using a syringe. Thereafter, 180 g of a 5.0 mass% aqueous solution of ammonium persulfate as a polymerization initiator was added into the flask using a syringe, and the reaction temperature was set to 60°C. After 2 hours, 90 g of a 5.0 mass% aqueous solution of ammonium persulfate as a polymerization initiator and 85 g of a 2.0 mass% aqueous solution of L-ascorbic acid as a polymerization accelerator were added in order to further increase the reaction conversion rate. After a further 2 hours, 90 g of a 5.0 mass% aqueous solution of ammonium persulfate as a polymerization initiator and 85 g of a 2.0 mass% aqueous solution of L-ascorbic acid as a polymerization accelerator were added. After 2 hours, 34 g of a 5 mass% aqueous solution of sodium nitrite as a reaction inhibitor was added into the flask and was stirred. Thereafter, the flask was cooled to 40°C, was converted to an air atmosphere, and the pH of the system was adjusted to 8.0 using 10 mass% ammonia water to thereby produce an aqueous solution containing a water-soluble polymer.

The obtained aqueous solution containing the water-soluble polymer was used to measure the weight-average molecular weight of the water-soluble polymer. The result is shown in Table 1.

<Production of water dispersion containing particulate binder>

A particulate binder was produced as follows.

First, a reactor including a stirrer was supplied with 70 parts of deionized water, 0.15 parts of sodium lauryl sulfate (EMAL® 2F (EMAL is a registered trademark in Japan, other countries, or both) produced by Kao Corporation) as an emulsifier, and 0.5 parts of ammonium persulfate as a polymerization initiator. The gas phase was purged with nitrogen gas, and the temperature was raised to 60°C.

Meanwhile, a monomer composition was produced in a separate vessel by mixing 50 parts of deionized water, 1.0 parts of sodium dodecylbenzenesulfonate as a dispersion stabilizer, 94 parts of n-butyl acrylate as a (meth)acrylic acid alkyl ester monomer, 2 parts of methacrylic acid as an acid group-containing monomer, 2 parts of acrylonitrile as a nitrile group-containing monomer, and 1 part of allyl methacrylate and 1 part of allyl glycidyl ether as cross-linkable monomers.

The obtained monomer composition was continuously added into the above-described reactor including a stirrer over 4 hours to perform polymerization. The reaction was carried out at 60°C during the addition. Once the addition was complete, a further 3 hours of stirring was performed at 70°C, and then the reaction was ended to yield a water dispersion containing a particulate binder formed of an acrylic polymer (ACL).

The obtained water dispersion containing the particulate binder was used to measure the volume particle diameter D50 of the particulate binder. The result is shown in Table 1.

<Production of binder composition>

After adding 0.2 parts of sodium dodecylbenzenesulfonate (NEOPELEX G-15 produced by Kao Corporation) as an emulsifier, 1.0 parts (in terms of solid content) of the aqueous solution containing the water-soluble polymer, and 0.5 parts of 1,2-benzo-4-isothiazolin-3-one as an amine compound to 100 parts of the particulate polymer, 10.0 parts in terms of solid content of the water dispersion containing the particulate binder was further added and was mixed therewith. In addition, an appropriate amount of deionized water was added to yield a binder composition having a solid content concentration of 20%.

The obtained binder composition was used to measure and evaluate the pH of the binder composition, the viscosity of the binder composition, the long-term redispersibility of the binder composition, and the long-term aggregation inhibition of the binder composition. The results are shown in Table 1.

<Production of non-conductive heat-resistant particle-containing composition>

After adding 0.5 parts of polyacrylic acid as a dispersant to 100 parts of alumina (AKP3000 produced by Sumitomo Chemical Co., Ltd.; volume particle diameter D50: 0.7 $\mu$m) as non-conductive heat-resistant particles, these materials were adjusted to a solid content concentration of 55% through addition of deionized water and were mixed using a ball mill. In addition, 4.0 parts in terms of solid content of the water dispersion containing the particulate binder and 1.5 parts of an aqueous solution of carboxymethyl cellulose as a thickener were added to yield a non-conductive heat-resistant particle-containing composition.

<Production of slurry composition>

The binder composition obtained as described above was added to the non-conductive heat-resistant particle-containing composition obtained as described, and then deionized water was further added so as to adjust the solid content concentration to 40% and yield a slurry composition.

Note that the amount of the non-conductive heat-resistant particle-containing composition that was added to the binder composition was adjusted such that a volume ratio of the particulate polymer and the non-conductive heat-resistant particles (volume of particulate polymer/volume of non-conductive heat-resistant particles) in the obtained slurry composition was 10/90.

<Production of functional layer-equipped separator (laminate)>

A microporous membrane (thickness: 12 $\mu$m) made of polyethylene was prepared as a separator substrate. The slurry composition obtained as described above was applied onto one side of the separator substrate by bar coating. Next, the separator substrate with the slurry composition applied thereon was dried at 50°C for 1 minute to form a functional layer. The same operations were performed with respect to the other side of the separator substrate to produce a functional layer-equipped separator (laminate) including functional layers of 2.0 $\mu$m each in thickness at both sides of the separator substrate.

The obtained functional layer-equipped separator was used to measure and evaluate the thickness of the functional layer (heat-resistant particle layer), the adhesiveness of the functional layer, and the shedding resistance of the particulate polymer in the functional layer. The results are shown in Table 1.

(Example 2)

Various operations, measurements, and evaluations were performed in the same way as in Example 1 with the exception that in production of a metal hydroxide, magnesium chloride was changed from 10.0 parts to 15.0 parts, and sodium hydroxide was changed from 7.0 parts to 10.5 parts. The results are shown in Table 1.

(Example 3)

Various operations, measurements, and evaluations were performed in the same way as in Example 1 with the exception that in production of a metal hydroxide, magnesium chloride was changed from 10.0 parts to 7.0 parts, and sodium hydroxide was changed from 7.0 parts to 7.4 parts. The results are shown in Table 1.

(Example 4)

Various operations, measurements, and evaluations were performed in the same way as in Example 1 with the exception that in production of a metal hydroxide, magnesium chloride was changed from 10.0 parts to 3.0 parts, and sodium hydroxide was changed from 7.0 parts to 2.1 parts. The results are shown in Table 1.

(Example 5)

Various operations, measurements, and evaluations were performed in the same way as in Example 1 with the exception that in production of a monomer composition, a monomer composition was produced by mixing 65.0 parts of styrene as an aromatic monovinyl monomer and 10.0 parts of glycidyl methacrylate and 25.0 parts of ethylene glycol dimethacrylate as cross-linkable monomers. The results are shown in Table 1.

(Example 6)

Various operations, measurements, and evaluations were performed in the same way as in Example 1 with the exception that in production of a monomer composition, a monomer composition was produced by mixing 78.0 parts of styrene as an aromatic monovinyl monomer and 10.0 parts of glycidyl methacrylate and 12.0 parts of ethylene glycol dimethacrylate as cross-linkable monomers. The results are shown in Table 1.

(Example 7)

Various operations, measurements, and evaluations were performed in the same way as in Example 1 with the exception that in production of a monomer composition, a monomer composition was produced by mixing 72.8 parts of methyl methacrylate and 16.7 parts of n-butyl acrylate as (meth)acrylic acid alkyl ester monomers and 10 parts of glycidyl methacrylate and 0.5 parts of ethylene glycol dimethacrylate as cross-linkable monomers. The results are shown in Table 1.

(Example 8)

Various operations, measurements, and evaluations were performed in the same way as in Example 1 with the exception that in production of an aqueous solution containing a water-soluble polymer, 10 mass% ammonia water was changed to 8 mass% lithium hydroxide aqueous solution. The results are shown in Table 1.

(Example 9)

Various operations, measurements, and evaluations were performed in the same way as in Example 1 with the exception that in production of an aqueous solution containing a water-soluble polymer, 10 mass% ammonia water was changed to 8 mass% sodium hydroxide aqueous solution. The results are shown in Table 1.

(Example 10)

Various operations, measurements, and evaluations were performed in the same way as in Example 1 with the exception that in production of an aqueous solution containing a water-soluble polymer, 1,300 g of acrylic acid as an acid group-containing monomer was changed to 390 g (30.0 mass%) of acrylic acid as an acid group-containing monomer and 910 g (70.0 mass%) of acrylamide as an amide group-containing monomer. The results are shown in Table 1.

(Example 11)

Various operations, measurements, and evaluations were performed in the same way as in Example 1 with the exception that in production of an aqueous solution containing a water-soluble polymer, 1,300 g of acrylic acid as an acid group-containing monomer was changed to 650 g (50.0 mass%) of acrylic acid and 650 g (50.0 mass%) of 2-acrylamido-2-methylpropane sulfonic acid as acid group-containing monomers, and 10 mass% ammonia water was changed to 8 mass% sodium hydroxide aqueous solution. The results are shown in Table 1.

(Example 12)

Various operations, measurements, and evaluations were performed in the same way as in Example 1 with the exception that in production of an aqueous solution containing a water-soluble polymer, an aqueous solution containing a water-soluble polymer was produced by adding 50 g of carboxymethyl cellulose (1220 produced by Daicel Corporation) as a water-soluble polymer into 950 g of deionized water, performing stirring, and adjusting the pH of the system to 8.0 using an 8 mass% sodium hydroxide aqueous solution. The results are shown in Table 1.

(Example 13)

Various operations, measurements, and evaluations were performed in the same way as in Example 1 with the exception that in production of a binder composition, the aqueous solution containing the water-soluble polymer was changed from 1.0 parts to 0.5 parts in terms of solid content. The results are shown in Table 1.

(Example 14)

Various operations, measurements, and evaluations were performed in the same way as in Example 1 with the exception that in production of a binder composition, the aqueous solution containing the water-soluble polymer was changed from 1.0 parts to 3.0 parts in terms of solid content. The results are shown in Table 1.

(Example 15)

Various operations, measurements, and evaluations were performed in the same way as in Example 1 with the exception that a product produced as described below was used as a water dispersion containing a particulate binder. The results are shown in Table 1.

<Production of water dispersion containing particulate binder>

A reactor was charged with 150 parts of deionized water, 25 parts of sodium dodecylbenzenesulfonate aqueous solution (concentration 10%) as an emulsifier, 63 parts of styrene as an aromatic monovinyl monomer, 3.5 parts of itaconic acid as an acid group-containing monomer, 1 part of 2-hydroxyethyl acrylate as a hydroxy group-containing monomer, and 0.5 parts of t-dodecyl mercaptan as a molecular weight modifier in this order. Next, gas inside of the reactor was purged with nitrogen three times, and then 32.5 parts of 1,3-butadiene was added as a conjugated diene monomer. With the reactor held at 60°C, 0.5 parts of potassium persulfate as a polymerization initiator was added to initiate a polymerization reaction, and this polymerization reaction was continued under stirring. At the point at which the polymerization conversion rate reached 96%, cooling was performed and 0.1 parts of hydroquinone aqueous solution (concentration 10%) as a polymerization inhibitor was added to quench the polymerization reaction. Thereafter, residual monomer was removed using a rotary evaporator having a water temperature of 60°C to yield a water dispersion containing a particulate binder formed of a styrene-butadiene polymer (SBR).
The obtained water dispersion containing the particulate binder was used to measure the volume particle diameter D50 of the particulate binder. The result is shown in Table 1.

(Example 16)

Various operations, measurements, and evaluations were performed in the same way as in Example 1 with the exception that in production of a binder composition, the solid content concentration of the binder composition was changed from 20% to 10%. The results are shown in Table 1.

(Example 17)

Various operations, measurements, and evaluations were performed in the same way as in Example 1 with the exception that in production of a binder composition, the solid content concentration of the binder composition was changed from 20% to 40%. The results are shown in Table 1.

(Example 18)

Various operations, measurements, and evaluations were performed in the same way as in Example 1 with the exception that a product produced as described below was used as a particulate polymer in production of a binder composition and that the application thickness of a slurry composition on a separator substrate was changed in production of a functional layer-equipped separator (laminate). The results are shown in Table 1.

<Production of particulate polymer>

[Production of polyester polymer]

A four-necked flask of 5 L in capacity that was equipped with a nitrogen feeding tube, a dehydration tube, a stirrer, and a thermocouple was charged with 2,000 g of BPA-PO (propylene oxide adduct of bisphenol A; average number of moles added: 2.2 moles) and 800 g of BPA-EO (ethylene oxide adduct of bisphenol A; average number of moles added: 2.2 moles) as alcohol components, 600 g of fumaric acid and 500 g of trimellitic anhydride as carboxylic acid components, and 4 g of dibutyltin oxide, and these materials were reacted at 220°C for 8 hours. Thereafter, the reaction was further performed at 8.3 kPa until the softening point of the reaction product (measured as described below) was 150°C to yield a lumpy polyester polymer. The obtained polyester polymer was used to measure the glass-transition temperature of the polyester polymer. The result is shown in Table 1.

-Measurement method of softening point-

A capillary rheometer flow tester (produced by Shimadzu Corporation; product name: CFT-500D) was used to heat 1 g of a sample at a heating rate of 6°C/min while also applying a load of 1.96 MPa through a plunger so as to extrude the sample from a nozzle of 1 mm in diameter and 1 mm in length, and thereby draw a curve of flow tester plunger descent (flow value) against temperature. With the height of this S-shaped curve taken to be h, a temperature corresponding to h2 (i.e., the temperature at which half of the polymer had flowed out) was taken to be the softening point.

[Production of ester wax (meltability additive)]

A four-necked flask of 0.5 L in capacity having a nitrogen feeding tube, an impeller, and a condenser attached thereto was charged with 18 g (0.13 mol) of pentaerythritol and 104 g (0.52 mol) of lauric acid, and these materials were reacted at 220°C for 10 hours while evaporating produced water in a stream of nitrogen. Next, 46.5 g of toluene, 32 g of 2-propanol, and 19 g of a 10% potassium hydroxide aqueous solution containing 2.0 equivalents of potassium hydroxide relative to the acid value were added, were stirred at 70°C for 30 minutes, and were then left to settle for 30 minutes. The aqueous phase was subsequently removed to yield a crude product.

Water washing was performed four times at 70°C using 40 parts of deionized water relative to 100 parts of the crude product so as to adjust the pH to 7. Solvent was evaporated from the resultant purified product under heated and reduced pressure conditions, and filtration, solidification, and pulverization were also performed to yield 140 g of pentaerythritol tetralaurate (melting point: 44°C) as an ester wax.

[Dissolution and suspension]

The polyester polymer and the ester wax were converted to particles through a dissolution and suspension method to yield a particulate polymer.

Specifically, 100 parts of the polyester polymer obtained as described above, 10 parts of the ester wax obtained as described above, and 230 parts of toluene as an organic solvent were dispersed in a ball mill to yield a liquid composition.

Separately thereto, 480 parts of an aqueous solution (concentration: 5%) of hydroxyapatite, 6 parts of an aqueous solution (concentration: 1%) of sodium dodecylbenzenesulfonate, and 120 parts of water were mixed to prepare an aqueous medium.

The liquid composition was dispersed in the aqueous medium using a homogenizer. Note that the circumferential speed of a rotor was adjusted to within a range of 6 m/s to 8 m/s. The resultant dispersion liquid was placed under conditions of a temperature of 50°C to 70°C and a pressure of 30 mmHg to 150 mmHg so as to remove toluene. The composition present after toluene removal was cooled, was subsequently washed through addition of 12 N hydrochloric acid until the pH was 2, and was then further subjected to water washing, drying, and classification to yield a particulate polymer containing the polyester polymer and the ester wax. Note that the particulate polymer obtained in this manner is solid particles.

The obtained particulate polymer was used to measure the volume particle diameter D50 of the particulate polymer, the true specific gravity of the particulate polymer, and the average circularity and median circularity of the particulate polymer. The results are shown in Table 1. Note that the chemical composition of a particulate polymer of Example 18 in Table 1 indicates the chemical composition of the polyester polymer.

(Example 19)

Various operations, measurements, and evaluations were performed in the same way as in Example 1 with the exception that an aqueous solution of sodium polyacrylate (ARON A-20L produced by Toagosei Co., Ltd.) was used as an aqueous solution containing a water-soluble polymer. The results are shown in Table 1.

(Example 20)

Various operations, measurements, and evaluations were performed in the same way as in Example 1 with the exception that an aqueous solution of ammonium polyacrylate (ARON A-30 produced by Toagosei Co., Ltd.) was used as an aqueous solution containing a water-soluble polymer. The results are shown in Table 1.

(Example 21)

Various operations, measurements, and evaluations were performed in the same way as in Example 1 with the exception that an aqueous solution of polyacrylic acid (ARON A-10H produced by Toagosei Co., Ltd.) was used as an aqueous solution containing a water-soluble polymer. The results are shown in Table 1.

(Comparative Example 1)

Various operations, measurements, and evaluations were performed in the same way as in Example 1 with the exception that in production of a binder composition, an aqueous solution containing a water-soluble polymer was not added to the binder composition. The results are shown in Table 1.

(Comparative Example 2)

Various operations, measurements, and evaluations were performed in the same way as in Example 1 with the exception that in production of a binder composition, a product produced as described below was used as a particulate polymer, and 0.2 parts of sodium dodecylbenzenesulfonate (NEOPELEX G-15 produced by Kao Corporation) was not added as an emulsifier. The results are shown in Table 1.

<Production of particulate polymer>

[Emulsion polymerization]

A 5 MPa pressure-resistant vessel equipped with a stirrer was charged with a monomer composition containing 79.9 parts of styrene as an aromatic monovinyl monomer, 18 parts of 2-ethylhexyl acrylate as a (meth)acrylic acid alkyl ester monomer, 2 parts of methacrylic acid as an acid group-containing monomer, and 0.1 parts of ethylene glycol dimethacrylate as a cross-linkable monomer, and also with 1 part of sodium dodecylbenzenesulfonate as an emulsifier, 150 parts of deionized water, and 0.5 parts of potassium persulfate as a polymerization initiator. These materials were thoroughly stirred and were then heated to 60°C to initiate polymerization.

At the point at which the polymerization conversion rate reached 96%, cooling was performed to quench the reaction to yield a water dispersion containing a particulate polymer. Note that the particulate polymer obtained in this manner is solid particles.

The obtained particulate polymer (water dispersion) was used to measure the glass-transition temperature of the particulate polymer, the volume particle diameter D50 of the particulate polymer, the true specific gravity of the particulate polymer, and the average circularity and median circularity of the particulate polymer. The results are shown in Table 1.

(Comparative Example 3)

Various operations, measurements, and evaluations were performed in the same way as in Example 1 with the exception that in production of a metal hydroxide, magnesium chloride was changed from 10.0 parts to 1.5 parts, and sodium hydroxide was changed from 7.0 parts to 1.1 parts. The results are shown in Table 1.
In Table 1:

"ST" indicates styrene unit;
"BA" indicates n-butyl acrylate unit;
"MMA" indicates methyl methacrylate unit;
"2EHA" indicates 2-ethylhexyl acrylate unit;
"GMA" indicates glycidyl methacrylate unit;
"EDMA" indicates ethylene glycol dimethacrylate unit;
"BPA-PO" indicates bisphenol A-propylene oxide adduct unit;
"BPA-EO" indicates bisphenol A-ethylene oxide adduct unit;
"FA" indicates fumaric acid unit;
"TMA" indicates trimellitic anhydride unit;
"MAA" indicates methacrylic acid unit;
"Solid" indicates solid particles;
"Suspension" indicates production of particulate polymer performed by suspension polymerization method;
"Dissolution" indicates production of particulate polymer performed by dissolution and suspension method;
"Emulsion" indicates production of particulate polymer performed by emulsion polymerization method;
"AA" indicates acrylic acid unit;
"Aam" indicates acrylamide unit;
"AMPS" indicates 2-acrylamido-2-methylpropane sulfonic acid unit;
"CMC" indicates carboxymethyl cellulose unit;
"$NH_4^+$" indicates ammonium salt;
"$Li^+$" indicates lithium salt;
"$Na^+$" indicates sodium salt;
"ACL" indicates acrylic copolymer;
"SBR" indicates styrene-butadiene copolymer;
"Content" indicates content per 100 parts by mass of particulate polymer;
"BIT" indicates 1,2-benzo-4-isothiazolin-3-one; and
"Heat-resistant particles" indicates non-conductive heat-resistant particles.

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 | Example 19 | Example 20 | Example 21 | Comparative example 1 | Comparative example 2 | Comparative example 3 |
|---|---|---|---|---|---|---|---|---|---|---|---|---|---|---|---|---|---|---|---|---|---|---|---|---|---|
| Slurry composition for electrochemical device functional layer — Binder composition — Particulate polymer — Chemical composition [mass%] | ST | 72.8 | 72.8 | 72.8 | 72.8 | 65.0 | 78.0 | - | 72.8 | 72.8 | 72.8 | 72.8 | 72.8 | 72.8 | 72.8 | 72.8 | 72.8 | 72.8 | - | 72.8 | 72.8 | 72.8 | 72.8 | 79.9 | 72.8 |
| | BA | 16.7 | 16.7 | 16.7 | 16.7 | - | - | 16.7 | 16.7 | 16.7 | 16.7 | 16.7 | 16.7 | 16.7 | 16.7 | 16.7 | 16.7 | 16.7 | - | 16.7 | 16.7 | 16.7 | 16.7 | - | 16.7 |
| | MMA | - | - | - | - | - | - | 72.8 | - | - | - | - | - | - | - | - | - | - | - | - | - | - | - | 18.0 | - |
| | 2EHA | - | - | - | - | - | - | - | - | - | - | - | - | - | - | - | - | - | - | - | - | - | - | - | - |
| | GMA | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | - | 10.0 | 10.0 | 10.0 | 10.0 | 0.1 | 10.0 |
| | EDMA | 0.5 | 0.5 | 0.5 | 0.5 | 25.0 | 12.0 | 0.5 | 0.5 | 0.5 | 0.5 | 0.5 | 0.5 | 0.5 | 0.5 | 0.5 | 0.5 | 0.5 | - | 0.5 | 0.5 | 0.5 | 0.5 | - | 0.5 |
| | BPA-PO | - | - | - | - | - | - | - | - | - | - | - | - | - | - | - | - | - | 51.3 | - | - | - | - | - | - |
| | BPA-EO | - | - | - | - | - | - | - | - | - | - | - | - | - | - | - | - | - | 20.5 | - | - | - | - | - | - |
| | FA | - | - | - | - | - | - | - | - | - | - | - | - | - | - | - | - | - | 15.4 | - | - | - | - | - | - |
| | TMA | - | - | - | - | - | - | - | - | - | - | - | - | - | - | - | - | - | 12.8 | - | - | - | - | - | - |
| | MAA | - | - | - | - | - | - | - | - | - | - | - | - | - | - | - | - | - | - | - | - | - | - | 2.0 | - |
| | Volume particle diameter D50 [μm] | 5.0 | 2.0 | 9.8 | 12.8 | 5.1 | 5.1 | 5.0 | 5.0 | 5.0 | 5.0 | 5.0 | 5.0 | 5.0 | 5.0 | 5.0 | 5.0 | 5.0 | 6.0 | 5.0 | 5.0 | 5.0 | 5.0 | 0.5 | 17.2 |
| | True specific gravity [g/cm³] | 1.07 | 1.07 | 1.07 | 1.07 | 1.08 | 1.08 | 1.17 | 1.07 | 1.07 | 1.07 | 1.07 | 1.07 | 1.07 | 1.07 | 1.07 | 1.07 | 1.07 | 1.45 | 1.07 | 1.07 | 1.07 | 1.07 | 1.07 | 1.07 |
| | Glass-transition temperature [°C] | 75 | 75 | 75 | 75 | 164 | 119 | 72 | 75 | 75 | 75 | 75 | 75 | 75 | 75 | 75 | 75 | 75 | 62 | 75 | 75 | 75 | 75 | 66 | 75 |
| | Internal structure | Solid | Solid | Solid | Solid | Solid | Solid | Solid | Solid | Solid | Solid | Solid | Solid | Solid | Solid | Solid | Solid | Solid | Solid | Solid | Solid | Solid | Solid | Solid | Solid |
| | Average circularity | 0.988 | 0.989 | 0.987 | 0.987 | 0.987 | 0.987 | 0.988 | 0.988 | 0.988 | 0.988 | 0.988 | 0.988 | 0.988 | 0.988 | 0.988 | 0.988 | 0.988 | 0.971 | 0.988 | 0.988 | 0.988 | 0.988 | 0.988 | 0.988 |
| | Median circularity | 0.997 | 0.998 | 0.996 | 0.996 | 0.996 | 0.996 | 0.997 | 0.997 | 0.997 | 0.997 | 0.997 | 0.997 | 0.997 | 0.997 | 0.997 | 0.997 | 0.997 | 0.989 | 0.997 | 0.997 | 0.997 | 0.997 | 0.997 | 0.997 |
| | Polymerization method | Suspension | Suspension | Suspension | Suspension | Suspension | Suspension | Suspension | Suspension | Suspension | Suspension | Suspension | Suspension | Suspension | Suspension | Suspension | Suspension | Suspension | Dissolution | Suspension | Suspension | Suspension | Suspension | Emulsion | Suspension |
| Water-soluble polymer — Chemical composition [mass%] | AA | 100 | 100 | 100 | 100 | 100 | 100 | 100 | 100 | 100 | 30 | 50 | - | 100 | 100 | 100 | 100 | 100 | 100 | 100 | 100 | 100 | 100 | 100 | 100 |
| | Aam | - | - | - | - | - | - | - | - | - | 70 | - | - | - | - | - | - | - | - | - | - | - | - | - | - |
| | AMPS | - | - | - | - | - | - | - | - | - | - | 50 | - | - | - | - | - | - | - | - | - | - | - | - | - |
| | CMC | - | - | - | - | - | - | - | - | - | - | - | 100 | - | - | - | - | - | - | - | - | - | - | - | - |
| | Type of salt | NH4 | NH4 | NH4 | NH4 | NH4 | NH4 | NH4 | Li | Na | NH4 | Na | Na | NH4 | NH4 | NH4 | NH4 | NH4 | NH4 | Na | NH4 | Not neutralized | NH4 | NH4 | NH4 |
| | Weight-average molecular weight | 10000 | 10000 | 10000 | 10000 | 10000 | 10000 | 10000 | 10000 | 10000 | 11000 | 14000 | 130000 | 10000 | 10000 | 10000 | 10000 | 10000 | 10000 | 500000 | 100000 | 200000 | - | 10000 | 10000 |
| | Content [parts by mass] | 1.0 | 1.0 | 1.0 | 1.0 | 1.0 | 1.0 | 1.0 | 1.0 | 1.0 | 1.0 | 1.0 | 1.0 | 0.5 | 3.0 | 1.0 | 1.0 | 1.0 | 1.0 | 0.5 | 0.5 | 0.5 | 0 | 1.0 | 1.0 |
| Particulate binder | Type | ACL | ACL | ACL | ACL | ACL | ACL | ACL | ACL | ACL | ACL | ACL | ACL | ACL | ACL | SBR | ACL | ACL | ACL | ACL | ACL | ACL | ACL | ACL | ACL |
| | Volume particle diameter D50 [μm] | 0.3 | 0.3 | 0.3 | 0.3 | 0.3 | 0.3 | 0.3 | 0.3 | 0.3 | 0.3 | 0.3 | 0.3 | 0.3 | 0.3 | 0.15 | 0.3 | 0.3 | 0.3 | 0.3 | 0.3 | 0.3 | 0.3 | 0.3 | 0.3 |
| | Content [parts by mass] | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 | 10.0 |
| Amine compound | Type | BIT | BIT | BIT | BIT | BIT | BIT | BIT | BIT | BIT | BIT | BIT | BIT | BIT | BIT | BIT | BIT | BIT | BIT | BIT | BIT | BIT | BIT | BIT | BIT |
| | Content [parts by mass] | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | pH | 8.0 | 8.0 | 8.0 | 8.0 | 8.0 | 8.0 | 8.0 | 8.0 | 8.0 | 8.5 | 6.5 | 7.2 | 8.2 | 7.7 | 8.1 | 8.0 | 8.0 | 8.0 | 8.0 | 8.0 | 5.7 | 9.0 | 8.0 | 8.0 |
| | Viscosity [mPa·s] | 3 | 3 | 3 | 3 | 3 | 3 | 3 | 3 | 3 | 3 | 3 | 3 | 3 | 3 | 3 | 3 | 3 | 3 | 8 | 8 | 10 | 3 | 3 | 3 |
| | Solid content concentration [mass%] | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 | 10.0 | 40.0 | 20.0 | 20.0 | 20.0 | 20.0 | 20.0 | 20.0 | 20.0 |
| Heat-resistant particles | Type | Alumina | Alumina | Alumina | Alumina | Alumina | Alumina | Alumina | Alumina | Alumina | Alumina | Alumina | Alumina | Alumina | Alumina | Alumina | Alumina | Alumina | Alumina | Alumina | Alumina | Alumina | Alumina | Alumina | Alumina |
| | Volume particle diameter D50 [μm] | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 | 0.7 |
| Volume ratio of particulate polymer and heat-resistant particles (volume of particulate polymer/volume of heat-resistant particles) | | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 | 10/90 |
| Content of particulate binder per 100 parts of heat-resistant particles [parts by mass] | | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 | 4.3 |
| Thickness of functional layer [μm] | | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| Volume particle diameter D50 relative to thickness of functional layer | | 2.5 | 1 | 4.9 | 6.4 | 2.55 | 2.55 | 2.5 | 2.5 | 2.5 | 2.5 | 2.5 | 2.5 | 2.5 | 2.5 | 2.5 | 2.5 | 2.5 | 3 | 2.5 | 2.5 | 2.5 | 2.5 | 0.25 | 8.6 |
| Evaluation | Long-term redispersibility of binder composition | A | A | A | B | A | A | A | A | A | A | A | A | B | A | A | A | B | B | A | A | A | C | A | C |
| | Adhesiveness of functional layer | A | C | A | A | A | A | A | A | A | A | A | A | A | A | A | A | A | A | B | A | A | A | D | A |
| | Shedding resistance of particulate polymer in functional layer | A | A | B | B | B | B | B | B | B | B | B | A | A | B | B | B | B | A | A | A | A | B | A | C |
| | Long-term aggregation inhibition of binder composition | B | B | B | B | B | B | B | B | B | B | B | A | B | B | B | B | B | B | A | A | C | B | B | B |

As can clearly be seen from Table 1, the binder compositions of Examples 1 to 21 have excellent long-term redispersibility and can cause a functional layer to display excellent adhesiveness.

INDUSTRIAL APPLICABILITY

According to the present disclosure, it is possible to provide a binder composition for an electrochemical device functional layer that has excellent redispersibility after long-term storage and that can cause a functional layer to display excellent adhesiveness.

Moreover, according to the present disclosure, it is possible to provide a slurry composition for an electrochemical device functional layer in which the presently disclosed binder composition for an electrochemical device functional layer is used.

Furthermore, according to the present disclosure, it is possible to provide a laminate for an electrochemical device that includes a functional layer formed using the aforementioned binder composition for an electrochemical device functional layer or the aforementioned slurry composition for an electrochemical device functional layer.

Also, according to the present disclosure, it is possible to provide an electrochemical device that includes the aforementioned laminate for an electrochemical device.

**Claims**

1. A binder composition for an electrochemical device functional layer comprising a particulate polymer, a water-soluble polymer, and water, wherein
   the particulate polymer has a volume particle diameter D50 of not less than 1.0 $\mu$m and not more than 15.0 $\mu$m and a true specific gravity of not less than 1.00 and not more than 2.00.

2. The binder composition for an electrochemical device functional layer according to claim 1, wherein the water-soluble polymer has a weight-average molecular weight of not less than 80,000 and not more than 500,000.

3. The binder composition for an electrochemical device functional layer according to claim 1, wherein the water-soluble polymer has a weight-average molecular weight of not less than 5,000 and not more than 200,000.

4. The binder composition for an electrochemical device functional layer according to any one of claims 1 to 3, wherein the water-soluble polymer includes an acid group.

5. The binder composition for an electrochemical device functional layer according to any one of claims 1 to 4, having a pH of not lower than 6.0 and not higher than 12.0.

6. The binder composition for an electrochemical device functional layer according to any one of claims 1 to 5, having a viscosity of not less than 0.5 mPa·s and not more than 10 mPa·s.

7. The binder composition for an electrochemical device functional layer according to any one of claims 1 to 6, further comprising a particulate binder.

8. The binder composition for an electrochemical device functional layer according to any one of claims 1 to 7, having a solid content concentration of not less than 10.0 mass% and not more than 35.0 mass%.

9. The binder composition for an electrochemical device functional layer according to any one of claims 1 to 8, further comprising an amine compound.

10. A slurry composition for an electrochemical device functional layer comprising: the binder composition for an electrochemical device functional layer according to any one of claims 1 to 9; and non-conductive heat-resistant particles.

11. A laminate for an electrochemical device comprising: a substrate; and a functional layer formed on the substrate, wherein
    the functional layer is obtained using the binder composition for an electrochemical device functional layer according to any one of claims 1 to 9 or the slurry composition for an electrochemical device functional layer according to claim 10.

12. An electrochemical device comprising the laminate for an electrochemical device according to claim 11.

# EP 4 683 089 A1

## INTERNATIONAL SEARCH REPORT

| International application No. |
|---|
| **PCT/JP2024/006550** |

### A. CLASSIFICATION OF SUBJECT MATTER

*H01M 50/443*(2021.01)i; *H01G 11/38*(2013.01)i; *H01M 50/403*(2021.01)i; *H01M 50/411*(2021.01)i; *H01M 50/434*(2021.01)i; *H01M 50/446*(2021.01)i; *H01M 50/451*(2021.01)i
FI:  H01M50/443 B; H01G11/38; H01M50/403 D; H01M50/411; H01M50/434; H01M50/443 M; H01M50/446; H01M50/451

According to International Patent Classification (IPC) or to both national classification and IPC

### B. FIELDS SEARCHED

Minimum documentation searched (classification system followed by classification symbols)

H01M50/443; H01G11/38; H01M50/403; H01M50/411; H01M50/434; H01M50/446; H01M50/451

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-98203 A (NIPPON ZEON CO.) 01 June 2017 (2017-06-01) | 1-12 |
| A | WO 2023/008319 A1 (NIPPON ZEON CO.) 02 February 2023 (2023-02-02) | 1-12 |
| A | JP 2018-147578 A (ASAHI KASEI CORP.) 20 September 2018 (2018-09-20) | 1-12 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 May 2024** | **14 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/006550**

| Patent document cited in search report | | | Publication date (day/month/year) | Patent family member(s) | Publication date (day/month/year) |
|---|---|---|---|---|---|
| JP | 2017-98203 | A | 01 June 2017 | (Family: none) | |
| WO | 2023/008319 | A1 | 02 February 2023 | (Family: none) | |
| JP | 2018-147578 | A | 20 September 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020175292 A1
- WO 2022163780 A1
- JP 2012204303 A
- JP 2013145763 A